# EUROPÄISCHE PATENTSCHRIFT

(11) **EP 1 847 181 B1**
(45) Veröffentlichungstag und Bekanntmachung des Hinweises auf die Patenterteilung: **17.12.2008**
(21) Anmeldenummer: 07105494.4
(22) Anmeldetag: 02.04.2007
(51) Int. Cl.: A23L 1/226, C11B 9/00, C07D 307/00

(54) **Neue Verwendungen von Nonenolid**
New applications for nonenolide
Nouvelles utilisations de nonenolides

(30) Priorität: 19.04.2006 US 792944 P
(43) Veröffentlichungstag der Anmeldung: 24.10.2007
(73) Patentinhaber: Symrise GmbH & Co. KG, 37603 Holzminden (DE)
(72) Erfinder: Kindel, Günter, 37671, Höxter (DE); Vössing, Tobias, 37688, Beverungen (DE); Looft, Jan, 37603, Holzminden (DE); Wöhrle Ingo, 37603, Holzminden (DE); Lages, Rita, 37619, Bodenwerder (DE); Loges, Hubert, 37671, Höxter (DE)
(74) Vertreter: Eisenführ, Speiser & Partner

(56) Entgegenhaltungen:
- US-A- 3 767 427
- US-A- 5 646 022
- LIZARRAGA-GUERRA ROBERTO ET AL: "Identification of the most potent odorants in huitlacoche (Ustilago maydis) and austern pilzen (Pleurotus sp.) by aroma extract dilution analysis and static head-space samples" JOURNAL OF AGRICULTURAL AND FOOD CHEMISTRY, Bd. 45, Nr. 4, 1997, Seiten 1329-1332, XP002440350 ISSN: 0021-8561

## Beschreibung

Die vorliegende Erfindung betrifft primär die Verwendung von Nonenolid (5-Pentyl-5H-furan-2-on) zum Vermitteln, Modifizieren und/oder Verstärken bestimmter Geruchs- oder Geschmackseindrücke und daneben bestimmte parfümierte oder aromatisierte Artikel wie Riech- und Aromastoffmischungen (Riech- und Aromastoffkompositionen) umfassend (a) eine (sensorisch wirksame) Menge an Nonenolid, (b) eine, mehrere oder sämtliche Verbindungen ausgewählt aus der Gruppe bestehend aus (i) Menthol, (ii) (-)-Carvon, (iii) Menthon und (iv) Isomenthon sowie vorzugsweise (c) 4-Methyl-5-hydroxy-hexansäurelacton. Die Erfindung betrifft ferner bestimmte Zubereitungen sowie Verfahren zum Vermitteln, Modifizieren und/oder Verstärken bestimmter Geruchs- oder Geschmackseindrücke sowie zur Herstellung von Riech- oder Aromastoffkompositionen, die Nonenolid umfassen.

Trotz einer Vielzahl bereits vorhandener Riech- bzw. Aromastoffe besteht in der Parfüm- bzw. Aromenindustrie auch weiterhin ein genereller Bedarf an neuartigen Riech- bzw. Aromastoffen, die über ihre primären, nämlich eigenen geruchlichen bzw. geschmacklichen Eigenschaften hinaus zusätzliche positive Sekundäreigenschaften besitzen, beispielsweise in Mischungen mit anderen Riech- bzw. Aromastoffen.

So besteht ein Bedarf an Riech- bzw. Aromastoffen, die (in Riech- oder Aromastoffkompositionen) interessante Geruchsnoten erzeugen und mit ihren neuartigen bzw. originellen Duft- bzw. Geschmackseigenschaften die Möglichkeiten des Parfümeurs bzw. Flavorists erweitern.

Für die Kreation neuartiger moderner Kompositionen besteht ein ständiger Bedarf an Riech- bzw. Aromastoffen mit besonderen geruchlichen/geschmacklichen Eigenschaften, die geeignet sind, als Bestandteil einer Komposition von neuartigen Parfüms oder Aromen mit komplexem Geruchs- bzw. Geschmackscharakter zu dienen. So werden insbesondere Riech- und Aromastoffe gesucht, die neben einer heuartigen Duft- bzw. Geschmacksnote weitere Noten und Aspekte aufweisen, die ihnen geruchlichen bzw. geschmacklichen Charakter und Komplexität verleihen.

Daher bestand die dieser Erfindung zugrunde liegende Aufgabe im Wesentlichen darin, Riech- bzw. Aromastoffe mit heuartigen (Haupt- oder Neben)Noten zu finden, welche gepaart sind mit weiteren interessanten und originellen geruchlichen bzw. geschmacklichen Eigenschaften, wodurch die gesuchten Riech- bzw. Aromastoffe neuartige und originelle Riech- bzw. Aromastoffkompositionen mit besonderen Noten und Aspekten ermöglichen.

Erfindungsgemäß wird diese Aufgabe primär durch die Verwendung von Nonenolid als Riech- und/oder Aromastoff zum Vermitteln, Modifizieren und/oder Verstärken einer oder mehrerer Geruchs- oder Geschmackseindrücke aus der Gruppe bestehend aus Heu (nach trockenem Gras und etwas süßlich) und Cumarin gelöst. Weitere Aspekte der Erfindung ergeben sich aus den beigefügten Patentansprüchen und der nachfolgenden Beschreibung und betreffen dabei insbesondere parfümierte oder aromatisierte Artikel (insbesondere Riech- oder Aromastoffkompositionen sowie der Ernährung, der Mundpflege oder dem Genuss dienenden Zubereitungen) sowie Verfahren.

Es sei ergänzend darauf hingewiesen, dass Nonenolid allgemein zu einer Verwendung als Riech- und/oder Aromastoff zum Vermitteln, Modifizieren und/oder Verstärken einer oder mehrerer Geruchs- oder Geschmackseindrücke aus der Gruppe bestehend aus Heu, Cumarin, Lacton und Mundfülle geeignet ist.

Der Erfindung liegt unter anderem die überraschende Erkenntnis zugrunde, dass sich Nonenolid als Riech- und Aromastoff mit heuartiger Note eignet. Das erfindungsgemäß einzusetzende Nonenolid kann dabei als (R)-konfiguriertes, (S)-konfiguriertes oder beliebiges Gemisch der Enantiomeren, insbesondere als Racemat, vorliegen.

Die Strukturformel von Nonenolid (2-Nonen-4-olid; 4-Hydroxy-2-nonensäurelacton; IUPAC-Name: 5-Pentyl-5H-furan-2-on, 5-Pentyl-2(5H)-furanon) ist nachfolgend durch Formel A wiedergegeben:

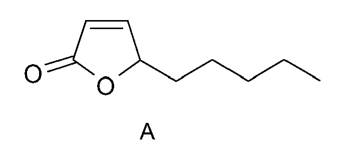

Nonenolid der Formel A ist bekannt und kann beispielsweise hergestellt werden gemäß J. Food Science 1978, 43, 1248-1252 (racemische Synthese) oder J. Org. Chem. 1995, 60, 5628-5633 (enantioselektive Synthese).

In US 3,767,427 ist ausgeführt, dass 4-Hydroxy-2-nonensäurelacton (Nonenolid der Formel A) per se einen starken Geruch von süßer Kokosnuss und Frittiertem aufweist. US 3,767,427 beschreibt (im Wesentlichen fettfreie) Lebensmittel enthaltend eine Menge an Nonenolid im Bereich von 0,1 - 20 ppm, wodurch dem Lebensmittel eine fettige, frittierte Geruchs- und Geschmacksnote vermittelt wird, insbesondere in Kombination mit ungesättigten delta-Lactonen mit 7 bis 12 Kohlenstoffatomen oder 2,4-Decadienal. Auf diese Weise kann Produkten wie gebackenen Kartoffelchips oder Margarine ein fettiger, frittierter Geruchs- und Geschmackseindruck vermittelt werden.

Gemäß J. Food Science 1978, 43, 1248-1252 wurde Baumwollsamenöl mit 2,5 ppm Nonenolid versetzt und durch ein Panel organoleptisch bewertet, wobei nussige, frittierte Noten festgestellt wurden, manche Panellisten gaben auch Butter-ähnliche Noten an.

In Agr. Biol. Chem. 1970, 34, 1745-1747 werden ungesättigte gamma-Lactone (wie Nonenolid eines ist) im Großen und Ganzen als fettig, grasig und süßlich beschrieben.

In J. Agric. Food Chem. 1997, 45, 1329-1332 wird über die Ergebnisse der Aromaextrakt-Verdünnungsanalyse von gekochten Huitlacoche-Pilzen berichtet. Mittels GC/Olfaktometrie wurde 2-Nonensäure-gamma-lacton (Nonenolid der Formel A) identifiziert, welches geruchlich mit "Kokosnuss" beschrieben wurde.

In Biosci. Biotech. Biochem. 1993, 57, 79-81 wurde eine Fraktion von diversen Lactonen aus einem flüchtigen Kondensat aus halbfermentiertem Pouchong-Tee gewonnen. Die Autoren vermuten, dass diese Lactonfraktion, welche unter anderem als Spurenkomponente Nonenolid enthielt, zu dem charakteristischen Geruch des Pouchong-Tees beiträgt.

Bei der oxidativen Zersetzung von (E,E)-2,4-Decadienal in wässrigem Medium bei einem pH-Wert von 6,5 wurde gemäß J. Agric. Food Chem. 1993, 41, 2385-2390 ein Produktgemisch erhalten, das unter anderem 1,5 % Nonenolid enthielt.

Cumarin (2H-1-Benzopyran-2-on) ist der wesentliche Bestandteil des Geruchs und Geschmacks des Waldmeisters (*Asperula odorata, Galium odoratum).* Cumarin weist unter anderem eine heuartige Note auf und war insbesondere in früheren Zeiten ein häufig eingesetzter Riech- und Aromastoff. Cumarin führt jedoch insbesondere in höheren Dosen zu gesundheitlichen Beeinträchtigungen; aus toxikologischen Gründen wäre es daher wünschenswert, eine alternative Verbindung für Cumarin zu finden.

Die Tatsache, dass das erfindungsgemäß einzusetzende Nonenolid einen heuartigen, cumarinigen Geruch- bzw. Geschmack hervorzurufen vermag ist besonders überraschend, da es sich strukturell von bekannten Substanzen mit ähnlichen Geruchsnoten deutlich unterscheidet. Dabei ist zu erwähnen, dass der cumarinige Aspekt des Nonenolids stärker ausgeprägt ist als die heuartige Note.

Nonenolid vermag, insbesondere in Kombination mit einer (d.h. einer einzelnen der nachfolgend aufgeführten Verbindungen (i), (ii), (iii) oder (iv)), mehreren oder sämtlichen Verbindungen ausgewählt aus der Gruppe bestehend aus (i) Menthol, (ii) (-)-Carvon, (iii) Menthon und (iv) Isomenthon, je nach Einsatzkonzentration, einen vielfältigen Geruchs- und Geschmackseindruck der Noten Heu, Cumarin, Lacton und/oder Mundfülle zu bewirken.

Nonenolid der Formel A kann auf Grund der von ihm vermittelten Geruchs- und Geschmackseindrücke insbesondere eingesetzt werden bei der Herstellung von Aromen und Ölen, die in ihren sensorischen (geruchlichen und/oder geschmacklichen) Eigenschaften sowie vorzugsweise in ihrer Konsistenz natürlichen Pfefferminz- und/oder Spearmintaromen bzw. Pfefferminz- und/oder Spearmintölen äußerst ähnlich sind. Man spricht in diesem Zusammenhang von sensorischer Rekonstitution, Rekomposition oder Nachstellung der natürlichen Aromen bzw. Öle.

Die (sensorische) Rekonstitution (Rekomposition, Nachstellung) eines natürlichen Pfefferminz- und/oder Spearmintöls ist beispielsweise von Interesse, weil solche (sensorisch) rekonstituierten, rekomponierten bzw. nachgestellten Öle im Gegensatz zu ihren natürlichen Vorbildern, bei denen es sich um mittels Wasserdampfdestillation gewonnene etherische Öle handelt, keinen (sensorischen) Qualitätsschwankungen unterliegen und in ihren (sensorischen) Eigenschaften nicht von der Ernte, dem Anbaugebiet und/oder dem Gewinnungsprozess abhängen.

Bei der Rekonstitution, Rekomposition bzw. Nachstellung natürlicher Pfefferminz- und/oder Spearmintaromen bzw. natürlicher Pfefferminz- und/oder Spearmintöle wird neben dem Nonenolid der Formel A vorzugsweise auch 4-Methyl-5-hydroxyhexansäurelacton (5,6-Dimethyltetrahydro-2H-pyran-2-on, 4-Methyl-delta-Hexalacton) der Formel C eingesetzt, siehe dazu weiter unten im Detail.

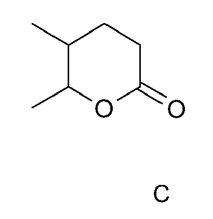

Gemäß einer bevorzugten Ausgestaltung der erfindungsgemäßen Verwendung wird Nonenolid (vorzugsweise gemeinsam mit 4-Methyl-5-hydroxyhexansäurelacton der Formel C) zum Vermitteln, Modifizieren und/oder Verstärken einer oder mehrerer Geruchs- oder Geschmackseindrücke aus der Gruppe Heu und Cumarin eingesetzt, wobei in dem resultierenden Nonenolid - haltigen Produkt (Artikel) die Verbindung Cumarin selbst nicht enthalten ist, und vorzugsweise auch keine Fraktion eines natürlichen Öls oder Aromas enthalten ist, die selbst eine heuartige, cumarinige Note besitzt.

Unter natürlichen Pfefferminzölen, welche unter Verwendung von Nonenolid (sensorisch) rekonstituiert werden können, werden im Speziellen die etherischen (d.h. mittels Wasserdampfdestillation gewonnenen) Öle bestimmter Mentha-Spezies verstanden, insbesondere aus *Mentha arvensis* (Ackerminze, USsprachlich auch cornmint genannt) und aus *Mentha piperita* (US -sprachlich peppermint genannt), diese schließen *Mentha piperita* Öle mit regionalen Herkunftsbezeichnungen spezieller Anbaugebiete wie Willamette, Yakima und Madras ein.

Die besagten natürlichen Pfefferminzöle weisen eine heuartige, cumarinige Note auf, welche den bislang bekannten (sensorisch) rekonstituierten, rekomponierten oder nachgestellten Pfefferminzölen fehlt. Die heuartige, cumarinige Note natürlicher Pfefferminzöle rührt allerdings nicht vom Cumarin, da diese kein Cumarin enthalten, sondern wohl von anderen, teilweise nicht identifizierten und in Pfefferminzölen nur in Spuren vorhandenen, Verbindungen.

Unter natürlichen Spearmintölen (Krauseminzölen), welche unter Verwendung von Nonenolid (sensorisch) rekonstituiert werden können, werden im Speziellen die etherischen Öle aus *Mentha cardiaca* oder *Mentha spicata* verstanden.

Die Erfindung betrifft ferner parfümierte oder aromatisierte Artikel umfassend oder bestehend aus (a) Nonenolid, (b) einer, mehreren oder sämtlichen Verbindungen ausgewählt aus der Gruppe bestehend aus (i) Menthol, (ii) (-)-Carvon, (iii) Menthon, (iv) Isomenthon sowie vorzugsweise (c) 4-Methyl-5-hydroxy-hexansäurelacton und/oder (d) Menthylacetat.

Nonenolid verleiht einem entsprechend parfümierten oder aromatisierten Artikel eine besondere Natürlichkeit und/oder Authentizität.

Vorzugsweise ist ein parfümierter oder aromatisierter erfindungsgemäßer Artikel dabei ausgewählt aus der Gruppe bestehend aus:
- Riech- oder Aromastoffkomposition, vorzugsweise Pfefferminz- oder Krauseminzaromastoffkomposition,
- der Ernährung dienende Zubereitung, vorzugsweise verzehrfertiges oder nicht verzehrfertiges Lebensmittel,
- der Mundpflege dienende Zubereitung und
- dem Genuss dienende Zubereitung.

In den erfindungsgemäßen parfümierten oder aromatisierten Artikeln, insbesondere den bevorzugten erfindungsgemäßen Artikeln aus der vorstehend genannten Gruppe, ist vorzugsweise eine Menge an Nonenolid enthalten, die ausreicht, um einen oder mehrere Geruchs- oder Geschmackseindrücke aus der Gruppe Heu und Cumarin zu vermitteln, zu modifizieren und/oder zu verstärken. Vorzugsweise umfassen die erfindungsgemäßen Artikel kein Cumarin und keine Fraktion eines natürlichen Öls oder Aromas, die selbst eine heuartige, cumarinige Note besitzt.

Es sei ergänzend darauf hingewiesen, dass in parfümierten oder aromatisierten Artikeln, insbesondere aus der vorstehend genannten Gruppe, allgemein eine Menge an Nonenolid enthalten sein kann, die ausreicht, um einen oder mehrere Geruchs- oder Geschmackseindrücke aus der Gruppe Heu, Cumarin, Lacton und Mundfülle zu vermitteln, zu modifizieren und/oder zu verstärken.

L-Menthol hat einen einzigartigen erfrischenden Geschmack, einen minzigen Geruch und eine stark wirkende Kühlung auf Haut und Schleimhaut. Es wird beispielsweise bei der Mundpflege, in kosmetischen und pharmazeutischen Präparaten, im Tabak und in Süßwaren verwendet, wie z.B. in Perfumer&Flavorist, Vol. 13, October-November 1988, S. 37 beschrieben. L-Menthol ist der Hauptbestandteil der Pfefferminzöle aus *Mentha arvensis* (Gehalt: etwa 70 - 80 Gew.-%) und *Mentha piperita* (Gehalt: etwa 50 - 60 Gew.-%).

Im Sinne der Erfindung kann das vorzugsweise in erfindungsgemäßen Artikeln eingesetzte Menthol d-Menthol, 1-Menthol oder eine beliebige Mischung hiervon sein, bevorzugt sind 1-Menthol, d-Menthol und racemisches Menthol, insbesondere bevorzugt ist 1-Menthol, da 1-Menthol die oben genannten sensorischen Eigenschaften aufweist welche für die (sensorische) Rekonstitution von Pfefferminzölen sehr vorteilhaft sind.

Es können auch beliebige Mischungen von synthetischem und natürlichem Menthol sowie von racemischem und enantiomerenreinem Menthol eingesetzt werden.

Das erfindungsgemäß vorzugsweise eingesetzte Menthol kann synthetischen oder natürlichen Ursprungs sein, bevorzugt ist jedoch der Einsatz synthetischen Menthols. (-)-Carvon ist der Hauptbestandteil des Krauseminzöls (Spearmintöl, Gehalt: etwa 70 - 80 Gew.-%) und hat einen krautigen, krauseminzigen Geruch und Geschmack. Das erfindungsgemäß vorzugsweise eingesetzte (-)-Carvon kann dabei synthetischen oder natürlichen Ursprungs sein.

Menthon und Isomenthon (beide können unabhängig voneinander als (+) und/oder (-) Enantiomer vorliegen) kommen in vielen etherischen Ölen vor, in Pfefferminzölen von *Mentha*-Spezies können sie sogar mit mehr als 50 Gew.-% enthalten sein. Menthon weist einen typischen kräftigen minzigen Geruch und Geschmack auf und wirkt kühlend, Isomenthon ist minzig, camphrig und kühlend, dabei etwas dumpfer als Menthon.

Im Sinne der Erfindung kann das vorzugsweise eingesetzte Menthon (+)-Menthon, (-)-Menthon sowie eine beliebige Mischung hiervon sein, bevorzugt sind (+)-Menthon, (-)-Menthon und racemisches Menthon, insbesondere bevorzugt ist (-)-Menthon, da dieses für die Herstellung nicht-natürlicher oder synthetischer Pfefferminzöle bzw. -aromen und die (sensorische) Rekonstitution natürlicher Pfefferminzöle sehr vorteilhaft ist.

Im Sinne der Erfindung kann das eingesetzte Isomenthon (+)-Isomenthon, (-)-Isomenthon sowie eine beliebige Mischung hiervon sein, bevorzugt sind (+)-Isomenthon, (-)-Isomenthon und racemisches Isomenthon, insbesondere bevorzugt ist (+)-Isomenthon, da dieses für die Herstellung nicht- natürlicher oder synthetischer Pfefferminzöle bzw. -aromen und die (sensorische) Rekonstitution natürlicher Pfefferminzöle sehr vorteilhaft ist.

Aus dem Vorgesagten ergibt sich, dass das erfindungsgemäß einzusetzende Nonenolid insbesondere dann zum Vermitteln, Modifizieren und/oder Verstärken der genannten Geruchs- oder Geschmackseindrücke befähigt ist, wenn es in Mischungen mit einer, mehreren oder sämtlichen Verbindungen ausgewählt aus der Gruppe bestehend aus (i) Menthol, (ii) (-)-Carvon, (iii) Menthon und (iv) Isomenthon vorliegt. Nonenolid ist deshalb besonders geeignet zur Einarbeitung in Riech- oder Aromastoffkompositionen, vorzugsweise Pefferminz- und/oder Krauseminzaromakompositionen, sowie in der Ernährung, der Mundpflege oder dem Genuss dienende Zubereitungen mit Pfefferminz- oder Krauseminz-Geruchs- oder -geschmacksnoten.

Diese Verwendbarkeit des Nonenolid ist insbesondere deshalb bemerkenswert, weil dessen weiter oben angegebenen bekannten Geruchs- und Geschmackseindrücke (fettig, frittiert, Kokosnuss, siehe insoweit die obigen Dokumente) in Kombination mit einer, mehreren oder sämtlichen Verbindungen der Gruppe bestehend aus (i) Menthol, (ii) (-)-Carvon, (iii) Menthon und (iv) Isomenthon nicht nur weitgehend oder vollständig unterdrückt werden, sondern statt dessen die gesuchte und erwünschte heuartige bzw. cumarinige Note auftritt. Darüberhinaus weist Nonenolid einen niedrigen sensorischen Schwellenwert auf, so dass es bereits in sehr geringer Dosierung wahrnehmbar ist und, eingearbeitet in eine Riech- oder Aromastoffkomposition, diese signifikant beeinflussen kann (siehe hierzu auch die Ausführungen weiter unten).

Die nachfolgende Tabelle 1 verdeutlicht die beobachteten sensorischen Effekte hinsichtlich einer heuartigen bzw. cumarinigen Note in Mischungen von einer oder mehreren Substanzen der Gruppe bestehend aus (i) Menthol, (ii) (-)-Carvon, (iii) Menthon und (iv) Isomenthon und Nonenolid der Formel A. Die Verkostung der erfindungsgemäßen Aromen T1 bis T6 gemäß Tabelle 1 erfolgte bei einer jeweiligen Dosierung von 0,2 Gew.-% in einer 5 Gew.-%igen wässrigen Zuckerlösung (Saccharoselösung).

**Tabelle 1 (alle Anteile sind in Gew.-% angegeben)**

| | **T1** | **T2** | **T3** | **T4** | **T5** | **T6** |
|---|---|---|---|---|---|---|
| Nonenolid der Formel A | 0,10 | 0,20 | 0,15 | 0,1 | 0,15 | 0,1 |
| (i) Menthol | 99,9 | | | 50,0 | 50,0 | 65,0 |
| (ii) (-)-Carvon | | 99,8 | | 49,9 | | |
| (iii) Menthon | | | 99,85 | | 25,0 | 23,0 |
| (iv) Isomenthon | | | | | 24,85 | 11,8 |
| (c) 4-Methyl-5-hydroxy-hexansäurelacton | | | | | | 0,1 |
| Bewertung der Noten Heu und Cumarin | + | + | + | ++ | +++ | ++++ |

| | | | | | | |
|---|---|---|---|---|---|---|
| +: merkliche heuartige bzw. cumarinige Note; ++: mittlere heuartige bzw. cumarinige Note; +++: ausgeprägte heuartige bzw. cumarinige Note; ++++: kräftige heuartige bzw. cumarinige Note. | | | | | | |

Die in Tabelle 1 gezeigten Ergebnisse belegen, dass in Mischungen von Nonenolid der Formel A und einer einzelnen Substanz der Gruppe bestehend aus (i) Menthol, (ii) (-)-Carvon, (iii) Menthon und (iv) Isomenthon bereits eine heuartige bzw. cumarinige Note auftritt. Deutlicher tritt eine heuartige bzw. cumarinige Note auf, wenn zwei oder mehr Substanzen der Gruppe bestehend aus (i) Menthol, (ii) (-)-Carvon, (iii) Menthon und (iv) Isomenthon mit Nonenolid der Formel A kombiniert werden, wobei ferner auch eine Abrundung des Geruchs- bzw. Geschmacksprofils beobachtet werden kann.

Für das erfindungsgemäß einzusetzende Nonenolid wurden bei der Verkostung einer Mischung bestehend aus 5 Gew.-%iger wässriger Zuckerlösung und Pfefferminzaroma (Dosierung: 5000 ppm = 0,5 Gew.-%, das Pfefferminzaroma enthielt (i) I-Menthol zu 62 Gew.-%, 5% Menthylacetat (Bestandteil d)) und in Summe (iii) (-)-Menthon und (iv) (+)-Isomenthon zu 23 Gew.-% sowie weitere Bestandteile, die zum Geschmackseindruck keinen wesentlichen Beitrag leisten) die folgenden geschmacklichen Eigenschaften gefunden:
bei einer Konzentration an Nonenolid von 10 ppm (bezogen auf die Gesamtmenge der verkosteten Mischung):
die Noten Heu und Cumarin werden beim Einsatz nicht natürlichen Pfefferminzöls vermittelt (analog wurden bei Verwendung natürlichen Pfefferminzöls, z.B. mit einem Anteil an I-Menthol von 70 Gew.-%, die Noten Heu und Cumarin verstärkt). Dieser Effekt dominiert im Bereich von etwa 1 - 15 ppm.

Bei einer Konzentration an Nonenolid von 20 ppm: Lacton-Note
Dieser Effekt dominiert im Bereich von etwa 15 - 25 ppm.

Bei einer Konzentration an Nonenolid von 30 ppm: Mundfülle
Dieser Effekt dominiert oberhalb von 30 ppm, d.h. im Bereich von etwa 30 - 100 ppm.

Die vorstehend genannten geruchlichen bzw. geschmacklichen Effekte gehen in den Grenzbereichen der angegebenen Konzentrationen jeweils fließend ineinander über. Vorstehend wurden Konzentrationsbereiche angegeben, in denen der jeweils angegebene geruchliche bzw. geschmackliche Effekt eindeutig dominiert.

Unter dem Geschmackseindruck "Mundfülle" wird vorliegend der mundfüllende Geschmackseindruck von Cremigkeit, Sahnigkeit und Milchfettigkeit verstanden.

Das erfindungsgemäß einzusetzende Nonenolid kann auch zur Reduzierung der Bitterkeit bitter schmeckender Substanzen eingesetzt werden. Bei Einsatz von Nonenolid wurde in Artikeln, die eine bittere Geschmacksnote aufweisen, in manchen Fällen eine Reduzierung der Bitterkeit bereits bei Zugabe geringer Mengen von Nonenolid der Formel A festgestellt, beispielsweise bei Kaugummis, deren Kaugummibase als bitter schmeckend empfunden wurde, oder bestimmten Süßstoff-haltigen Artikeln, die auf Grund der Anwesenheit bestimmter Süßstoffe mit bitterem Nachgeschmack insgesamt als bitterschmeckend beurteilt werden. Ebenfalls konnte eine Reduzierung der Bitterkeit bei Herstellung bestimmter erfindungsgemäßer parfümierter oder aromatisierter Artikel festgestellt werden, die das in höherer Konzentration bitter schmeckende Menthol umfassten. Die Anwesenheit von Nonenolid neben Menthol unterdrückte dessen bitterschmeckende Wirkung.

In erfindungsgemäßen Riech- oder Aromastoffkompositionen ist vorzugsweise eine Menge an Nonenolid im Bereich von 50 bis 8000 ppm, bevorzugt 100 bis 5000 ppm und besonders bevorzugt 250 bis 2000 ppm enthalten, bezogen auf die Gesamtmenge der Riech- oder Aromastoffkomposition.

Bevorzugt sind erfindungsgemäße Riech- oder Aromastoffkompositionen oder der Ernährung, der Mundpflege oder dem Genuss dienende Zubereitungen (insbesondere gemäß einer der vorstehend als bevorzugt bezeichneten Ausgestaltungen), die eine Menge an einer oder mehren Verbindungen ausgewählt aus der Gruppe bestehend aus (i) Menthol, (ii) (-)-Carvon, (iii) Menthon und (iv) Isomenthon enthalten, die ausreicht, um in der Riech- oder Aromastoffkomposition oder der Zubereitung eine dominierende Pefferminz- und/oder Krauseminz-Geruchs- oder Geschmacksnote zu erzeugen. In solchen Riech- oder Aromastoffkompositionen oder Zubereitungen ist - wie ausgeführt - eine Menge an Nonenolid enthalten, die ausreicht, um einen oder mehrere Geruchs- oder Geschmackseindrücke aus der Gruppe Heu und Cumarin zu vermitteln, zu modifizieren und/oder zu verstärken. Die Substanz Cumarin ist vorzugsweise in einem solchen erfindungsgemäßen Artikel nicht vorhanden, und vorzugsweise umfasst ein solcher Artikel auch kein natürliches Pfefferminz- oder Krauseminzöl und kein natürliches Pfefferminz- oder Krauseminzaroma. Insbesondere ist aber vorzugsweise zumindest keine Fraktion eines natürlichen Öls oder Aromas vorhanden, wie sie in den besagten natürlichen Ölen oder Aromen für die heuartige, cumarinige Note verantwortlich ist.

Es sei ergänzend darauf hingewiesen, dass allgemein in Riech- oder Aromastoffkompositionen oder der Ernährung, der Mundpflege oder dem Genuss dienenden Zubereitungen, die eine Menge an einer oder mehren Verbindungen ausgewählt aus der Gruppe bestehend aus (i) Menthol, (ii) (-)-Carvon, (iii) Menthon und (iv) Isomenthon enthalten, die ausreicht, um in der Riech- oder Aromastoffkomposition oder der Zubereitung eine dominierende Pefferminz- und/oder Krauseminz-Geruchs- oder Geschmacksnote zu erzeugen, eine Menge an Nonenolid enthalten sein kann, die ausreicht, um einen oder mehrere Geruchs- oder Geschmackseindrücke aus der Gruppe Heu, Cumarin, Lacton und Mundfülle zu vermitteln, zu modifizieren und/oder zu verstärken. In bevorzugten erfindungsgemäßen Riech- oder Aromastoffkompositionen liegen die Konzentrationen der relevanten oben genannten Bestandteile vorzugsweise in bestimmten Bereichen. Insbesondere bevorzugt sind erfindungsgemäße Riech- oder Aromakompositionen (vorzugsweise gemäß einer der vorstehend angegebenen bevorzugten Ausgestaltungen), umfassend:
(a) Nonenolid in einer Menge von vorzugsweise 50 bis 8000 ppm, bevorzugt 100 bis 5000 ppm und besonders bevorzugt 250 bis 2000 ppm, sowie
(b)
   (i) Menthol, vorzugsweise I-Menthol, in einer Menge von 1 bis 80 Gew.-%, bevorzugt 5 bis 70 Gew.-%,
      und/oder
   (ii) . (-)-Carvon in einer Menge von 1 bis 80 Gew.-%, bevorzugt 5 bis 80 Gew.-%,
      und/oder
   (iii) Menthon, vorzugsweise (-)-Menthon,
      und/oder
   (iv) Isomenthon, vorzugsweise (+)-Isomenthon, in einer Gesamtmenge von 0,5 bis 60 Gew.-%, bevorzugt 1 bis 50 Gew.-%,
      sowie vorzugsweise
(c) 4-Methyl-5-hydroxy-hexansäurelacton in einer Menge von 50 bis 8000 ppm, bevorzugt 100 bis 5000 ppm und besonders bevorzugt 250 bis 2000 ppm,
   und/oder
(d) Menthylacetat, vorzugsweise (-)-Menthylacetat in einer Menge von 1 bis 20 Gew.-%, bevorzugt 2 bis 12 Gew.-%, besonders bevorzugt 3 bis 10 Gew.-%,
wobei die Mengenangaben jeweils bezogen sind auf die Gesamtmenge der Riech- oder Aromastoffkomposition.

Der Anteil an (i) Menthol liegt hierbei in rekonstituierten (rekombinierten, nachgestellten) Pfefferminzaromen und Pfefferminzölen vorzugsweise im Bereich von 30 bis 60 Gew.-%.

Der Gehalt an (-)-Carvon liegt hierbei in rekonstituierten (rekombinierten, nachgestellten) Spearmintaromen und Spearmintölen vorzugsweise im Bereich von 30 bis 70 Gew.-%.

Der Gesamtanteil an Menthon und Isomenthon liegt hierbei in rekonstituierten (rekombinierten, nachgestellten) Pfefferminzaromen und Pfefferminzölen vorzugsweise im Bereich von 5 bis 40 Gew.-%.

Die Strukturformeln der besonders bevorzugten Verbindungen der Gruppe (b) sind im Folgenden dargestellt:

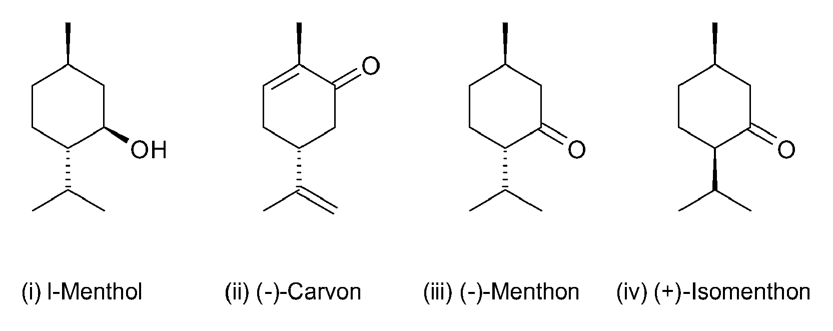

Die Strukturformel des erfindungsgemäß besonders bevorzugt als Komponente (d) einzusetzenden (-)-Menthylacetat (I-Menthylacetat) ist in der nachfolgenden Formel D wiedergegeben.

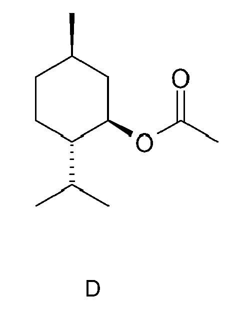

Die bevorzugte Komponente (d) (-)-Menthylacetat (der Formel D) weist einen frisch-fruchtigen, pfefferminzigen Geruch auf und komplettiert insbesondere bei rekonstituierten (rekombinierten, nachgestellten) Pfefferminzaromen und Pfefferminzölen das Geruchs- und Aromaprofil.

Auch in den erfindungsgemäßen der Ernährung, der Mundpflege oder dem Genuss dienenden Zubereitungen (wie oben ausgeführt) sind bestimmte Konzentrationen von Nonenolid bzw. den erfindungsgemäßen Riech- oder Aromastoffkompositionen bevorzugt. Besonders bevorzugt sind erfindungsgemäße Zubereitungen umfassend
- Nonenolid in einer Menge im Bereich von 0,05 bis 80 ppm, bevorzugt im Bereich von 0,1 bis 50 ppm und besonders bevorzugt im Bereich von 0,25 bis 20 ppm
   oder
- eine erfindungsgemäße Riech- oder Aromastoffkomposition (vorzugsweise in einer bevorzugten Ausgestaltung) in einer Menge von 0,05 bis (in bestimmten Fällen) 50 Gew.-%, bevorzugt im Bereich von 0,05 bis 6 Gew.-%, vorzugsweise im Bereich von 0,1 bis 3 Gew.-%,
bezogen auf das Gesamtgewicht der Zubereitung.

Die vorstehend genannten Konzentrationsangaben für erfindungsgemäße Zubereitungen betreffen insbesondere gebrauchsfertige Zubereitungen, d.h. direkt vom Endverbraucher einsetzbare Zubereitungen. Gebrauchsfertig sind insbesondere verzehrfertige Lebensmittel wie z. B. verzehrfertige Süßwaren oder verzehrfertige Getränke. Gebrauchsfertig sind aber auch Mundpflegeprodukte (Mundhygieneprodukte), welche direkt vom Konsumenten eingesetzt werden können

In gebrauchsfertigen Zubereitungen, insbesondere bei Süßwaren (wie Kaugummis und Karamellen) oder bei Mundhygieneprodukten (wie Zahnpasten, - cremes und -gelen), liegt der Anteil einer erfindungsgemäßen Nonenolid der Formel A enthaltenden Riech- oder Aromastoffkomposition vorzugsweise im Bereich von 0,05 bis 6 Gew.-%, bevorzugt im Bereich von 0,1 bis 3 Gew.-%, bezogen auf das Gesamtgewicht der gebrauchsfertigen Zubereitung.

In verzehrfertigen alkoholischen oder nicht-alkoholischen Getränken im Sinne der Erfindung liegt der Anteil einer erfindungsgemäßen Nonenolid der Formel A enthaltenden Riech- oder Aromastoffkomposition vorzugsweise im Bereich von 3 bis 100 ppm, bevorzugt im Bereich von 5 bis 50 ppm, bezogen auf das Gesamtgewicht der verzehrfertigen Zubereitung.

Sofern es sich bei der gebrauchsfertigen Zubereitung allerdings um eine zum Direktverzehr geeignete Kapsel handelt (siehe Beispiel F10 unten) kann der Anteil der einzusetzenden erfindungsgemäßen Nonenolid enthaltenden Riech- oder Aromastoffkomposition deutlich höher liegen und bis zu 50 Gew.-% betragen.

Die erfindungsgemäßen der Ernährung, der Mundpflege oder dem Genuss dienenden Zubereitungen sind regelmäßig Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel) oder wieder aus der Mundhöhle entfernt zu werden (z.B. Kaugummis oder Zahnpasta). Es versteht sich, dass der Einsatz von Nonenolid bzw. den erfindungsgemäßen Riech- oder Aromastoffkompositionen für jede Art solcher Produkte vorgesehen ist. Zu diesen Produkten gehören dabei sämtliche Stoffe oder Erzeugnisse, die dazu bestimmt sind, in verarbeitetem, teilweise verarbeitetem oder unverarbeitetem Zustand vom Menschen aufgenommen zu werden. Hierzu zählen auch Stoffe, die Lebensmitteln bei ihrer Herstellung, Verarbeitung oder Bearbeitung zugesetzt werden und dazu vorgesehen sind, in die menschliche Mundhöhle eingebracht zu werden.

Es versteht sich, dass Nonenolid sowie die erfindungsgemäßen Riech- oder Aromastoffkompositionen insbesondere in Lebensmitteln eingesetzt werden können. Im Rahmen des vorliegenden Textes werden unter einem "Lebensmittel" insbesondere Stoffe verstanden, die dazu bestimmt sind, in unverändertem, zubereitetem oder verarbeitetem Zustand vom Menschen geschluckt und dann verdaut zu werden; als Lebensmittel werden insoweit auch Umhüllungen, Überzüge oder sonstige Umschließungen verstanden, die dazu bestimmt sind, mitverschluckt zu werden, oder bei denen ein Verschlucken vorauszusehen ist. Auch bestimmte Produkte, die üblicherweise wieder aus der Mundhöhle entfernt werden (z.B. Kaugummis) sind im Rahmen des vorliegenden Textes als Lebensmittel zu verstehen, da bei ihnen nicht auszuschließen ist, dass sie zumindest teilweise geschluckt werden.

Insbesondere wird Nonenolid bzw. eine erfindungsgemäße Riech- oder Aromastoffkomposition in verzehrfertigen Lebensmitteln eingesetzt. Unter einem verzehrfertigen Lebensmittel ist hierbei ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen auch Getränke sowie feste oder halbfeste verzehrfertige Lebensmittel. Als Beispiele seien genannt Tiefkühlprodukte, die vor dem Verzehr aufgetaut und auf Verzehrtemperatur erwärmt werden müssen. Auch Produkte wie Joghurt oder Eiscreme aber auch Kaugummis oder Hartkaramellen zählen zu den verzehrfertigen Lebensmitteln.

Nonenolid sowie erfindungsgemäße Riech- oder Aromastoffkompositionen können auch in Lebensmittel-Halbfertigwaren eingesetzt werden. Der Begriff Lebensmittel-Halbfertigware bezieht sich hierbei auf Lebensmittel, die dazu bestimmt sind, erst im weiter verarbeiteteten Zustand, nach Hinzufügen von für den sensorischen Eindruck (mit)entscheidenden Aroma- oder Geschmacksstoffen verzehrt zu werden.

Unter einem Mundpflegeprodukt (auch Mundhygieneprodukt oder mundhygienische Zubereitung genannt) im Sinne der Erfindung wird eine der dem Fachmann geläufigen Formulierungen zur Reinigung und Pflege der Mundhöhle und des Rachenraumes sowie zur Erfrischung des Atems verstanden. Hierbei ist die Pflege der Zähne und des Zahnfleisches ausdrücklich eingeschlossen. Darreichungsformen gebräuchlicher mundhygienischer Formulierungen sind Cremes, Gele, Pasten, Schäume, Emulsionen, Suspensionen, Areosole, Sprays als auch Kapseln, Granulate, Pastillen, Tabletten, Bonbons oder Kaugummis, ohne dass diese Aufzählung für die Zwecke dieser Erfindung limitierend verstanden werden soll.

Bevorzugte verzehrfertige alkoholische oder nicht-alkoholische Getränke im Sinne der Erfindung sind (vorzugsweise kohlensäurefreie) nicht-alkoholische Erfrischungsgetränke oder alkoholische Liköre.

In einem verzehrfertigen nicht-alkoholischen Getränk im Sinne der Erfindung liegt der Anteil einer erfindungsgemäßen Nonenolid der Formel A enthaltenden Riech- oder Aromastoffkomposition vorzugsweise im Bereich von 3 bis 30 ppm (entsprechend etwa 0,3 bis 3 g pro 100 Litern Getränk), bevorzugt im Bereich von 5 bis 15 ppm (entsprechend etwa 0,5 bis 1,5 g pro 100 Litern Getränk), bezogen auf das Gesamtgewicht der verzehrfertigen Zubereitung. Verzehrfertige nicht-alkoholische Getränke im Sinne der Erfindung weisen vorzugsweise einen Zuckergehalt (Saccharosegehalt) bzw. einen Gehalt an Glucosesirup im Bereich von 8 bis 15 Gew.-%, bevorzugt im Bereich von 9 bis 13 Gew.-%, auf, bezogen auf das verzehrfertige nicht-alkoholische Getränk.

In einem verzehrfertigen alkoholischen Getränk im Sinne der Erfindung liegt der Anteil einer erfindungsgemäßen Nonenolid der Formel A enthaltenden Riech- oder Aromastoffkomposition vorzugsweise im Bereich von 10 bis 100 ppm (entsprechend etwa 1 bis 10 g pro 100 Litern Getränk), bevorzugt im Bereich von 25 bis 80 ppm (entsprechend etwa 2,5 bis 8 g pro 100 Litern Getränk), bezogen auf das Gesamtgewicht der verzehrfertigen Zubereitung. Verzehrfertige Getränke im Sinne der Erfindung sind vorzugsweise Liköre und weisen vorzugsweise einen Zuckergehalt (Saccharosegehalt) bzw. einen Gehalt an Glucosesirup im Bereich von 10 bis 25 Gew.-%, bevorzugt im Bereich von 15 bis 20 Gew.-%, auf, bezogen auf das verzehrfertige alkoholische Getränk. Der Alkoholgehalt liegt dabei vorzugsweise im Bereich von 12 bis 25 vol.-%, vorzugsweise im Bereich von 15 bis 20 vol.-%, bezogen auf das verzehrfertige alkoholische Getränk.

Eine bevorzugte erfindungsgemäße gebrauchsfertige Zubereitung ist (A) eine verzehrfertige und dabei zuckerfreie, zuckerreduzierte oder zuckerhaltige Süßware, insbesondere in Form von Schokolade, gefüllten Schokolade (beispielsweise mit aromatisierter Fondant-Masse, z.B. des Typs After -Eight), Schokoladenriegelprodukt, Fruchtgummi, Hart- oder Weichkaramelle, Kaubonbon, Zuckerperle, Lutscher, Kapsel (vorzugsweise nahtlose Kapsel, bevorzugt zum Direktverzehr, vorzugsweise mit einer Umhüllung basierend auf Gelatine und/oder Alginat), Kaugummi (z.B. in Form von Streifen, Komprimaten, Pellets, Kissen, Kugeln, Hohlkugeln), (B) ein Mundpflegeprodukt (Mundhygieneprodukt), insbesondere in Form von Zahnpasta, Zahncreme, Zahngel, Zahnpulver, Zahnputzflüssigkeit, Zahnputzschaum, Mundwasser, Zahncreme und Mundwasser als 2-in-1 Produkt, Lutschbonbon, Mundspray, Zahnseide, oder Zahnpflegekaugummi oder (C) ein alkoholisches oder alkoholfreies Getränk.

Unter die Begriffe "der Ernährung dienende Zubereitung" bzw. "dem Genuss dienende Zubereitung" fallen auch die vorstehend definierten gebrauchsfertigen Produkte und Lebensmittel (verzehrfertig oder als Lebensmittel-Halbfertigware). Es versteht sich, dass die im Rahmen des vorliegenden Textes verwendeten Bezeichnungen für bestimmte Artikelgruppen und Zubereitungen teilweise Erzeugnisse umfassen, welche unter mehrere Bezeichnungen fallen können. So gibt es beispielsweise der Ernährung dienende Zubereitungen, die gleichzeitig dem Genuss dienen, wobei es sich insbesondere um Lebensmittel handeln kann. Gemeinsam ist allen Bezeichnungen jedoch, dass sie Artikel (Produkte) betreffen, welche in die menschliche Mundhöhle eingebracht werden sollen, um dort einen Geruch- oder Geschmackseindruck zu verursachen.

In erfindungsgemäßen Riech- und/oder Aromastoffkompositionen, die (a) Nonenolid sowie (b) eine, mehrere oder sämtliche Verbindungen ausgewählt aus der Gruppe bestehend aus (i) Menthol, (ii) (-)-Carvon, (iii) Menthon, (iv) Isomenthon umfassen, vermag das erfindungsgemäß einzusetzende Nonenolid bereits in geringen Dosierungen das Gesamtbild der Riech- bzw. Aromastoffkomposition geruchlich bzw. geschmacklich abzurunden und insbesondere der Komposition mehr Authentizität und Natürlichkeit zu verleihen.

Im Falle eines rekonstituierten (rekombinierten, nachgestellten) d.h. nichtnatürlichen Pfefferminzöls (welches signifikante Mengen an Menthol enthält) bzw. Spearmintöls (welches signifikante Mengen an (-)-Carvon enthält) wird durch den Zusatz von Nonenolid der Formel A, insbesondere in den oben angegebenen Mengen, die Natürlichkeit und Authentizität jeweils deutlich erhöht, insbesondere wegen der durch das Nonenolid vermittelten Noten Heu und Cumarin, welche in natürlichem Pfefferminzöl und Spearmintöl ebenfalls vorhanden sind.

Durch Einarbeitung der Verbindung (c) 4-Methyl-5-hydroxy-hexansäurelacton, (5,6-Dimethyltetrahydro-2H-pyran-2-on, 4-Methyl-delta-Hexalacton) der Formel C: 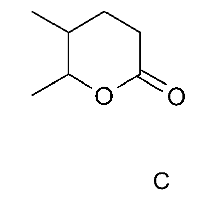 in einen erfindungsgemäßen parfümierten oder aromatisierten Artikel, insbesondere eine erfindungsgemäße Riech- oder Aromastoffkomposition, kommen insbesondere die durch das erfindungsgemäß einzusetzende Nonenolid vermittelten, modifizierten und/oder verstärkten Noten Heu und Cumarin intensiver zur Geltung, so dass hinsichtlich dieser Noten eine noch größere Natürlichkeit und Authentizität erreicht werden kann, insbesondere bei der Herstellung rekonstituierter (rekombinierter, nachgestellter), d.h. nicht-natürlicher Pfefferminz- und/oder Spearmintöle bzw. -aromen.

Dabei ist zu erwähnen, dass 4-Methyl-5-hydroxy-hexansäurelacton der Formel C in der Kombination mit Nonenolid der Formel A eine stärkere heuartige und eine schwächer ausgeprägte cumarinige Note bewirkt. Die Kombination der Verbindungen der Formeln A und C ermöglicht dadurch eine Maßschneiderung der Noten Heu und Cumarin, so dass auch ein sehr ausgeglichenes sensorisches Profil dieser beiden Noten erreicht werden kann.

4-Methyl-5-hydroxy-hexansäurelacton der Formel C kann dabei syn- oder antikonfiguriert sein, als (R,R)-konfiguriertes Enantiomer, (R,S)-konfiguriertes Enantiomer, (S,R)-konfiguriertes Enantiomer, (S,S)-konfiguriertes Enantiomer oder als beliebiges Gemisch der Enantiomeren, insbesondere als Racemat, oder auch als beliebiges Gemisch der entsprechenden Diastereomeren, vorliegen.

Die Verbindung der Formel C ist bekannt und wurde beispielsweise in Samen des Bockshornklees gefunden (Planta Medica 1985, 533-534) sowie in heissluftgetrockneten Tabakblättern (flue-cured tobacco), siehe beispielsweise Tobacco Science 1976, 20, 125-133 oder auch J. Chromatogr. A 2004, 1040, 1-17. Gemäß Tobacco Science 1976, 20, 125-133 weist die Verbindung der Formel C im Tabakrauch einen süßen, phenolischen und chemischen Geschmack auf.

Gemäß J. Agric. Food Chem. 1994, 42, 2344-2348 wurde die Verbindung der Formel C in einigen flüchtigen Fraktionen bestimmter Pilzkulturen (Basidiomyceten) gefunden. Der durch GC/Olfaktometrie ermittelte Geruch des 4-Methyl-5-hydroxy-hexansäurelactons wurde als fruchtig beschrieben.

Gemäß JP 60-72816 A kann die Verbindung der Formel C als Arzneimittel zur Behandlung von Schlafstörungen oder von psychoneurotischen Krankheiten eingesetzt werden. In diesem Dokument ist auch die Herstellung der Verbindung C beschrieben.

In Anlehnung an die EP 0 513 627 kann die Verbindung der Formel C auch durch Bayer-Villiger-Oxidation mit Persäuren, wie beispielsweise Peressigsäure, aus 2,3-Dimethylcyclopentanon hergestellt werden, welches wiederum durch Hydrierung aus 2,3-Dimethylcyclopentenon erhältlich ist.

Das dem erfindungsgemäß einzusetzenden Nonenolid der Formel A strukturell recht ähnliche gesättigte gamma-Nonalacton ist als nach Kokosnuss riechender bzw. schmeckender Stoff bekannt (vgl. K. Bauer et al., Common Fragrance and Flavor Materials, 4th Edition, Wiley-VCH, Weinheim 2001 oder auch Tobacco Science 1976, 20, 125-133).

Einige der in den oben bereits genannten Dokumenten Planta Medica 1985, 533-534 und Tobacco Science 1976, 20, 125-133 jeweils untersuchten Extrakte oder Fraktionen enthielten sowohl das gesättigte gamma-Nonalacton als auch 4-Methyl-5-hydroxy-hexansäurelacton, jedoch nicht die erfindungsgemäß einzusetzende Verbindung der Formel A.

Zusammenfassend besitzen daher die folgenden erfindungsgemäßen Riech- oder Aromastoffkompositionen (Mischungen) eine überraschende geruchliche und/oder geschmackliche Qualität:
- Riech- oder Aromastoffmischungen (= Kompositionen) umfassend Nonenolid und einen oder mehrere weitere Riech- oder Aromastoffe, wobei der Komposition durch das Nonenolid ein, mehrere oder sämtliche Geruchs- oder Geschmachseindrücke Heu und Cumarin vermittelt, modifiziert und/oder verstärkt wird;
- Riech- oder Aromastoffmischungen (= Kompositionen) umfassend Nonenolid und eine, mehrere oder sämtliche Verbindungen der Gruppe (b) (i) Menthol und/oder (ii) (-)-Carvon und/oder (iii) Menthon und/oder (iv) Isomenthon sowie einen oder mehrere weitere Riech- oder Aromastoffe.

Ferner ist festzuhalten, dass insbesondere Riech- oder Aromastoffkompositionen sowie entsprechende Artikel umfassend
(a) Nonenolid,
(b) (i) I-Menthol und/oder (ii) (-)-Carvon
   sowie gegebenenfalls
(c) 4-Methyl-5-hydroxy-hexansäurelacton
ganz besonders bevorzugt sind, da solche Kombinationen eine hervorragende Basis für die Herstellung rekonstituierter, (d.h. nicht-natürlicher) Pfefferminz- und Spearmintaromen sowie Pfefferminzöle und Spearmintöle darstellen.

Der erfindungsgemäßen Verwendung von Nonenolid entspricht ein erfindungsgemäßes Verfahren zum Vermitteln, Modifizieren und/oder Verstärken einer oder mehrerer Geruchs- oder Geschmackseindrücke aus der Gruppe Heu und Cumarin, wobei Nonenolid oder eine erfindungsgemäße Nonenolid umfassende Riech- oder Aromastoffkomposition (vorzugsweise in einer der oben als bevorzugt bezeichneten Ausgestaltungen) mit einem Erzeugnis in Kontakt gebracht oder gemischt wird.

Es sei ergänzend darauf hingewiesen, dass allgemein auch ein Verfahren zum Vermitteln, Modifizieren und/oder Verstärken einer oder mehrerer Geruchs- oder Geschmackseindrücke aus der Gruppe Heu, Cumarin, Lacton und Mundfülle möglich ist, wobei Nonenolid oder eine Nonenolid umfassende Riech- oder Aromastoffkomposition mit einem Erzeugnis in Kontakt gebracht oder gemischt wird.

Die sensorischen Eigenschaften, stofflichen Eigenschaften (wie Löslichkeit in gängigen Lösungsmitteln) sowie die Kompatibilität mit gängigen weiteren Bestandteilen von Riech- oder Aromastoffkompositionen unterstreichen die besondere Eignung des Nonenolid für die genannten Einsatzzwecke.

Die Erfindung betrifft auch ein Verfahren zur Herstellung einer Riech- oder Aromastoffkomposition, mit folgendem Schritt: Vermischen von Nonenolid mit üblichen Bestandteilen einer Riech- oder Aromastoffkomposition, wobei das Nonenolid in einer Menge eingesetzt wird, die ausreicht, um in der Riech- oder Aromastoffkomposition einen oder mehrere Geruchs- oder Geschmackseindrücke aus der Gruppe bestehend aus Heu und Cumarin zu vermitteln, zu modifizieren und/oder zu verstärken, wobei die besagte Riech- oder Aromastoffkomposition eine erfindungsgemäße Riech- oder Aromastoffkomposition ist und (a) Nonenolid mit (b) einer, mehreren oder sämtlichen Verbindungen ausgewählt aus der Gruppe bestehend aus (i) Menthol, (ii) (-)-Carvon, (iii) Menthon und (iv) Isomenthon sowie vorzugsweise (c) 4-Methyl-5-hydroxy-hexansäurelacton und/oder (d) Menthylacetat sowie gegebenenfalls weiteren (üblichen) Bestandteilen einer Riech- oder Aromastoffkomposition vermischt wird.

Es sei ergänzend darauf hingewiesen, dass allgemein ein Verfahren zur Herstellung einer Riech- oder Aromastoffkomposition mit folgendem Schritt möglich ist: Vermischen von Nonenolid mit üblichen Bestandteilen einer Riech- oder Aromastoffkomposition, wobei das Nonenolid in einer Menge eingesetzt wird, die ausreicht, um in der Riech- oder Aromastoffkomposition einen oder mehrere Geruchs- oder Geschmackseindrücke aus der Gruppe bestehend aus Heu, Cumarin, Lacton und Mundfülle zu vermitteln, zu modifizieren und/oder zu verstärken.

Zutaten, mit denen Nonenolid der Formel A (in einer der genannten Formen) kombiniert werden kann, sind beispielsweise: Konservierungsmittel, Abrasiva, Antiakne-Mittel, Mittel gegen Hautalterung, anitbakterielle Mittel, Anticellulitis-Mittel, Antischuppen-Mittel, entzündungshemmende Mittel, irritationsverhindernde Mittel, irritationshemmende Mittel, antimikrobielle Mittel, Antioxidantien, Adstringentien, schweisshemmende Mittel, antiseptische Mittel, Antistatika, Binder, Puffer, Trägermaterialien, Chelatbildner, Zellstimulantien, reinigende Mittel, pflegende Mittel, Enthaarungsmittel, oberflächenaktive Substanzen, deodorierende Mittel, Antiperspirantien, Weichmacher, Emulgatoren, Enzyme, ätherische Öle, Fasern, Filmbildner, Fixateure, Schaumbildner, Schaumstabilisatoren, Substanzen zum Verhindern des Schäumens, Schaumbooster, Fungizide, gelierende Mittel, gelbildende Mittel, Haarpflegemittel, Haarverformungsmittel, Haarglättungsmittel, feuchtigkeitsspendende Mittel, anfeuchtende Substanzen, feuchthaltende Substanzen, bleichende Mittel, stärkende Mittel, fleckenentfernende Mittel, optisch aufhellende Mittel, imprägnierende Mittel, schmutzabweisende Mittel, reibungsverringernde Mittel, Gleitmittel, Feuchtigkeitscremes, Salben, Trübungsmittel, plastifizierende Mittel, deckfähige Mittel, Politur, Glanzmittel, Polymere, Pulver, Proteine, rückfettende Mittel, abschleifende Mittel, Slilcone, hautberuhigende Mittel, hautreinigende Mittel, hautpflegende Mittel, hautheilende Mittel, Hautaufhellungsmittel, hautschützende Mittel, hauterweichende Mittel, kühlende Mittel, hautkühlende Mittel, wärmende Mittel, hautwärmende Mittel, Stabilisatoren, UV-absorbierende Mittel, UV-Filter, Waschmittel, Weichspüler, suspendierende Mittel, Hautbräunungsmittel, Verdickungsmittel, Vitamine, Öle, Wachse, Fette, Phospholipide, gesättigte Fettsäuren, ein- oder mehrfach ungesättigte Fettsäuren, alpha-Hydroxysäuren, Polyhydroxyfettsäuren, Verflüssiger, Farbstoffe, farbschützende Mittel, Pigmente, Antikorrosiva, Aromen, Geschmackstoffe, Riechstoffe, Polyole, Tenside, Elektrolyte, organische Lösungsmittel oder Silikonderivate.

Einzelne zur Verwendung im Rahmen der vorliegenden Erfindung bevorzugte Kühlwirkstoffe zur Einarbeitung in erfindungsgemäße Riech- und Aromastoffkompositionen bzw. Artikel sind nachfolgend aufgelistet. Der Fachmann kann die nachfolgende Liste um eine Vielzahl weiterer Kühlwirkstoffe ergänzen; die aufgelisteten Kühlwirkstoffe können auch in Kombination miteinander eingesetzt werden: Menthonglycerinacetal (Handelsname: Frescolat^{®}MGA), Menthyllactat (Handelsname: Frescolat^{®}ML, vorzugsweise handelt es sich bei Menthyllactat um 1-Menthyllactat, insbesondere I-Menthyl-I-lactat), substituierte Menthyl-3-carbonsäureamide (z.B. Menthyl-3-carbonsäure-N-ethylamid, auch als WS-3 bekannt), 2-Isopropyl-N-2,3-trimethylbutanamid (auch als WS-23 bekannt), substituierte Cyclohexancarbonsäureamide, 3-Menthoxypropan-1,2-diol, 2-Hydroxyethylmenthylcarbonat, 2-Hydroxypropylmenthylcarbonat, N-Acetylglycinmenthylester, Isopulegol, Menthylhydroxycarbonsäureester (z.B. Menthyl-3-hydroxybutyrat), Monomenthylsuccinat, 2-Mercaptocyclodecanon, Menthyl-2-pyrrolidin-5-oncarboxylat, 2,3-Dihydroxy-p-menthan, 3,3,5-trimethylcyclohexanonglycerinketal, 3-Menthyl-3,6-di- und -trioxaalkanoate, 3-Menthyl methoxyacetat, Icilin.

Besonders bevorzugte Kühlwirkstoffe sind: Menthonglycerinacetal (Handelsname: Frescolat^{®}MGA), Menthyllactat (vorzugsweise I-Menthyllactat, insbesondere I-Menthyl-I-lactat, Handelsname: Frescolat^{®}ML), substituierte Menthyl-3-carbonsäureamide (z.B. Menthyl-3-carbonsäure-N-ethylamid), 2-Isopropyl-N-2,3-trimethylbutanamid, 3-Menthoxypropan-1,2-diol, 2-Hydroxyethylmenthylcarbonat, 2-Hydroxypropylmenthylcarbonat, Isopulegol und Monomenthylsuccinat.

Wie vorstehend bereits ausgeführt, ist es vorteilhaft, in erfindungsgemäßen Riech- oder Aromastoffkompositionen einige oder mehrere übliche Riech- oder Aromastoffe einzusetzen. Auf diese Weise lassen sich besonders interessante und natürliche neue und originelle Geruchs- oder Geschmacksnoten kreieren. Riech- und Aromastoffe, die zur Kombination vorteilhafterweise geeignet sind, finden sich z.B. in S. Arctander, Perfume and Flavor Materials, Vol. I und II, Montclair, N. J. 1969, Eigenverlag, oder K. Bauer et al., Common Fragrance and Flavor Materials, 4th Edition, Wiley-VCH, Weinheim 2001. Im einzelnen seien genannt:
Extrakte aus natürlichen Rohstoffen wie Etherische Öle, Concretes, Absolues, Resine, Resinoide, Balsame, Tinkturen wie z. B.
Ambratinktur; Amyrisöl; Angelicasamenöl; Angelicawurzelöl; Anisöl; Baldrianöl; Basilikumöl; Baummoos -Absolue; Bayöl; Beifußöl; Benzoeresin; Bergamotteöl; Bienenwachs-Absolue; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolue; Castoreum-absolue; Cedernblätteröl; Cedernholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eau de brouts-Absolue; Eichenmoos-Absolue; Elemiöl; Estragonöl; Eucalyptus-citriodora-Öl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl; Helichrysum-Absolue; Helichrysumöl; Ingweröl; Iriswurzel-Absolue; Iriswurzelöl; Jasmin-Absolue; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolue; Labdanumresin; Lavandin-Absolue; Lavandinöl; Lavendel-Absolue; Lavendelöl; Lemongrasöl; Liebstocköl; Limetteöl destilliert; Limetteöl gepreßt; Linaloeöl; Litsea-cubeba-Öl; Lorbeerblätteröl; Macisöl; Majoranöl; Mandarinenöl; Massoirindenöl; Mimosa-Absolue; Moschuskörneröl; Moschustinktur; Muskateller-Salbei-ÖI; Muskatnußöl; Myrrhen-Absolue; Myrrhenöl; Myrtenöl; Nelkenblätteröl; Nelkenblütenöl; Neroliöl; Olibanum-Absolue; Olibanumöl; Opopanaxöl; Orangenblüten-Absolue; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolue; Rosenholzöl; Rosenöl; Rosmarinöl; Salbeiöl dalmatinisch; Salbeiöl spanisch; Sandelholzöl; Selleriesamenöl; Spiklavendelöl; Sternanisöl; Styraxöl; Tagetesöl; Tannennadelöl; Tea-tree-Öl; Terpentinöl; Thymianöl; Tolubalsam; Tonka-Absolue; Tuberosen-Absolue; Vanilleextrakt; Veilchenblätter-Absolue; Verbenaöl; Vetiveröl; Wacholderbeeröl; Weinhefenöl; Wermutöl; Wintergrünöl; Ylangöl; Ysopöl; Zibet-Absolue; Zimtblätteröl; Zimtrindenöl sowie Fraktionen davon, bzw. daraus isolierten Inhaltsstoffen;
Einzel-Riechstoffe aus der Gruppe der Kohlenwasserstoffe, wie z.B. 3-Caren; α-Pinen; β-Pinen; α-Terpinen; γ-Terpinen; p-Cymol; Bisabolen; Camphen; Caryophyllen; Cedren; Farnesen; Limonen; Longifolen; Myrcen; Ocimen; Valencen; (E,Z)-1,3,5-Undecatrien; Styrol; Diphenylmethan;
der aliphatischen Alkohole wie z.B. Hexanol; Octanol; 3-Octanol; 2,6-Dimethylheptanol; 2-Methyl-2-heptanol; 2-Methyl-2-octanol; (E)-2-Hexenol; (E)- und (Z)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (E,Z)-2,6-Nonadienol; 3,7-Dimethyl-7-methoxyoctan-2-ol; 9-Decenol; 10-Undecenol; 4-Methyl-3-decen-5-ol;
der aliphatischen Aldehyde und deren Acetale wie z.B. Hexanal; Heptanal; Octanal; Nonanal; Decanal; Undecanal; Dodecanal; Tridecanal; 2-Methyloctanal; 2-Methylnonanal; (E)-2-Hexenal; (Z)-4-Heptenal; 2,6-Dimethyl-5-heptenal; 10-Undecenal; (E)-4-Decenal; 2-Dodecenal;2,6,10-Trimethyl-9-undecenal; 2,6,10-Trimethyl-5,9-undecadienal; Heptanaldiethylacetal; 1,1-Dimethoxy-2,2,5-trimethyl-4-hexen; Citronellyloxyacetaldehyd; 1-(1-Methoxy-propoxy)-(E/Z)-3-hexen;
der aliphatischen Ketone und deren Oxime wie z.B. 2-Heptanon; 2-Octanon; 3-Octanon; 2-Nonanon; 5-Methyl-3-heptanon; 5-Methyl-3-heptanonoxim; 2,4,4,7-Tetramethyl-6-octen-3-on; 6-Methyl-5-hepten-2-on;
der aliphatischen schwefelhaltigen Verbindungen wie z.B. 3-Methylthio-hexanol; 3-Methylthiohexylacetat; 3-Mercaptohexanol; 3-Mercaptohexylacetat; 3-Mercaptohexylbutyrat; 3-Acetylthiohexylacetat; 1-Menthen-8-thiol;
der aliphatischen Nitrile wie z.B. 2-Nonensäurenitril; 2-Undecensäurenitril; 2-Tridecensäurenitril; 3,12-Tridecadiensäurenitril; 3,7-Dimethyl-2,6-octadiensäurenitril; 3,7-Dimethyl-6-octensäurenitril;
der Ester von aliphatischen Carbonsäuren wie z.B. (E)- und (Z)-3-Hexenylformiat; Ethylacetoacetat; Isoamylacetat; Hexylacetat; 3,5,5-Trimethylhexylacetat; 3-Methyl-2-butenylacetat; (E)-2-Hexenylacetat; (E)- und (Z)-3-Hexenylacetat; Octylacetat; 3-Octylacetat; 1-Octen-3-ylacetat; Ethylbutyrat; Butylbutyrat; Isoamylbutyrat; Hexylbutyrat; (E)- und (Z)-3-Hexenyl-isobutyrat; Hexylcrotonat; Ethylisovalerianat; Ethyl-2-methylpentanoat; Ethylhexanoat; Allylhexanoat; Ethylheptanoat; Allylheptanoat; Ethyloctanoat; Ethyl-(E,Z)-2,4-decadienoat; Methyl-2-octinat; Methyl-2-noninat; Allyl-2-isoamyloxyacetat; Methyl-3,7-dimethyl-2,6-octadienoat;4-Methyl-2-pentyl-crotonat;
der acyclischen Terpenalkohole wie z. B. Citronellol; Geraniol; Nerol; Linalool; Lavadulol; Nerolidol; Farnesol; Tetrahydrolinalool; Tetrahydrogeraniol; 2,6-Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol 2,6-Dimethyl-2,5,7-octatrien-1-ol; sowie deren Formiate, Acetate, Propionate, Isobutyrate, Butyrate, Isovalerianate, Pentanoate, Hexanoate, Crotonate, Tiglinate und 3-Methyl-2-butenoate;
der acyclischen Terpenaldehyde und -ketone wie z. B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;
der cyclischen Terpenalkohole wie z. B. Isopulegol; alpha-Terpineol; Terpinenol-4; Menthan-8-ol; Menthan-1-ol; Menthan-7-ol; Borneol; Isoborneol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate und 3-Methyl-2-butenoate;
der cyclischen Terpenaldehyde und -ketone wie z. B. 8-Mercaptomenthan-3-on; Campher; Fenchon; alpha-Ionon; beta-Ionon; alpha-n-Methylionon; beta-n-Methylionon; alpha-Isomethylionon; beta-Isomethylionon; alpha-Iron; alpha-Damascon; beta-Damascon; beta-Damascenon; delta-Damascon; gamma-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on;2-Methyl-4-(2,6,6-trimethyl-1-cyclohexen-1-yl)-2-butenal; Nootkaton; Dihydronootkaton; 4,6,8-Megastigmatrien-3-on; alpha-Sinensal; beta-Sinensal; acetyliertes Cedernholzöl (Methylcedrylketon);
der cyclischen Alkohole wie z.B. 4-tert.-Butylcyclohexanol; 3,3,5-Trimethylcyclohexanol; 3-Isocamphylcyclohexanol; 2,6,9-Trimethyl-Z2,Z5,E9-cyclododecatrien-1-ol; 2-Isobutyl-4-methyltetrahydro-2H-pyran-4-ol;
der cycloaliphatischen Alkohole wie z.B. alpha,3,3-Trimethylcyclohexylmethanol;1-(4-Isopropylcyclohexyl)ethanol; 2-Methyl-4-(2,2,3-trimethyl-3-cyclopent-1-yl)butanol; 2-Methyl-4-(2,2,3-trimethyl-3-cyclopent-1-yl)-2-buten-1-ol; 2-Ethyl-4-(2,2,3-trimethyl-3-cyclopent-1-yl)-2-buten-1-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;
der cyclischen und cycloaliphatischen Ether wie z.B. 1,8-Cineol (Eucalyptol); Cedrylmethylether; Cyclododecylmethylether;1,1-Dimethoxycyclododecan; (Ethoxymethoxy)cyclododecan; alpha-Cedrenepoxid; 3a,6,6,9a-Tetramethyldodecahydronaphtho[2,1-b]furan; 3a-Ethyl-6,6,9a-trimethyldodecahydronaphtho[2,1-b]furan; 1,5,9-Trimethyl-13-oxabicyclo[10.1.0]trideca-4,8-dien; Rosenoxid; 2-(2,4-Dimethyl-3-cyclohexen-1-yl)-5-methyl-5-(1-methylpropyl)-1,3-dioxan;
der cyclischen und makrocyclischen Ketone wie z.B. 4-tert.-Butylcyclohexanon; 2,2,5-Trimethyl-5-pentylcyclopentanon; 2-Heptylcyclopentanon; 2-Pentylcyclopentanon; 2-Hydroxy-3-methyl-2-cyclopenten-1-on; 3-Methyl-cis-2-penten-1-yl-2-cyclopenten-1-on; 3-Methyl-2-pentyl-2-cyclopenten-1-on; 3-Methyl-4-cyclopentadecenon; 3-Methyl-5-cyclopentadecenon; 3-Methylcyclopentadecanon; 4-(1-Ethoxyvinyl)-3,3,5,5-tetramethylcyclohexanon; 4-tert.-Pentylcyclohexanon; 5-Cyclohexadecen-1-on; 6,7-Dihydro-1,1,2,3,3-pentamethyl-4(5H)-indanon; 8-Cyclohexadecen-1-on; 9-Cycloheptadecen-1-on; Cyclopentadecanon; Cyclohexadecanon;
der cycloaliphatischen Aldehyde wie z.B. 2,4-Dimethyl-3-cyclohexencarbaldehyd; 2-Methyl-4-(2,2,6-trimethyl-cyclohexen-1-yl)-2-butenal; 4-(4-Hydroxy-4-methylpentyl)-3-cyclohexencarbaldehyd; 4-(4-Methyl-3-penten-1-yl)-3-cyclohexencarbaldehyd;
der cycloaliphatischen Ketone wie z. B. 1-(3,3-Dimethylcyclohexyl)-4-penten-1-on; 2,2-Dimethyl-1-(2,4-dimethyl-3-cyclohexen-1-yl)-1-propanon; 1-(5,5-Dimethyl-1-cyclohexen-1-yl)-4-penten-1-on; 2,3,8,8-Tetramethyl-1,2,3,4,5,6,7,8-octahydro-2-naphtalenylmethylketon; Methyl-2,6,10-trimethyl-2,5,9-cyclododecatrienylketon; tert.-Butyl-(2,4-dimethyl-3-cyclohexen-1-yl)keton;
der Ester cyclischer Alkohole wie z.B. 2-tert-Butylcyclohexylacetat; 4-tert-Butylcyclohexylacetat; 2-tert-Pentylcyclohexylacetat; 4-tert-Pentylcyclohexylacetat; 3,3,5-Trimethylcyclohexylacetat; Decahydro-2-naphthylacetat;2-Cyclopentylcyclopentylcrotonat; 3-Pentyltetrahydro-2H-pyran-4-ylacetat; Decahydro-2,5,5,8a-tetramethyl-2-naphthylacetat; 4,7-Methano-3a,4,5,6,7,7a-hexahydro-5, bzw. 6-indenylacetat; 4,7-Methano-3a,4,5,6,7,7a-hexahydro-5, bzw. 6-indenylpropionat; 4,7-Methano-3a,4,5,6,7,7a-hexahydro-5, bzw. 6-indenylisobutyrat; 4,7-Methanooctahydro-5, bzw. 6-indenylacetat;
der Ester cycloaliphatischer Alkohole wie z.B.1-Cyclohexylethylcrotonat;
der Ester cycloaliphatischer Carbonsäuren wie z. B. Allyl-3-cyclohexylpropionat; Allylcyclohexyloxyacetat; cis- und trans-Methyldihydrojasmonat; cis- und trans-Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;
der araliphatischen Alkohole wie z.B. Benzylalkohol; 1-Phenylethylalkohol; 2-Phenylethylalkohol; 3-Phenylpropanol; 2-Phenylpropanol; 2-Phenoxyethanol; 2,2-Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;
der Ester von araliphatischen Alkoholen und aliphatischen Carbonsäuren wie z.B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; alpha-Trichlormethylbenzylacetat; alpha,alpha-Dimethylphenylethylacetat; alpha,alpha-Dimethylphenylethylbutyrat; Cinnamylacetat; 2-Phenoxyethylisobutyrat; 4-Methoxybenzylacetat;
der araliphatischen Ether wie z.B. 2-Phenylethylmethylether; 2-Phenylethylisoamylether; 2-Phenylethyl-1-ethoxyethylether; Phenylacetaldehyddimethylacetal; Phenylacetaldehyddiethylacetal; Hydratropaaldehyddimethylacetal; Phenylacetaldehydglycerinacetal; 2,4,6-Trimethyl-4-phenyl-1,3-dioxan; 4,4a,5,9b-Tetrahydroindeno[1,2-d]-m-dioxin; 4,4a,5,9b-Tetrahydro-2,4-dimethylindeno[1,2-d]-m-dioxin;
der aromatischen und araliphatischen Aldehyde wie z. B. Benzaldehyd; Phenylacetaldehyd; 3-Phenylpropanal; Hydratropaaldehyd; 4-Methylbenzaldehyd; 4-Methylphenylacetaldehyd; 3-(4-Ethylphenyl)-2,2-dimethylpropanal; 2-Methyl-3-(4-isopropylphenyl)propanal; 2-Methyl-3-(4-tert.-butylphenyl)propanal; 2-Methyl-3-(4-isobutylphenyl)propanal; 3-(4-tert.-Butylphenyl)propanal; Zimtaldehyd; alpha-Butylzimtaldehyd; alpha-Amylzimtaldehyd; alpha-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4-Methylendioxybenzaldehyd; 3,4-Dimethoxybenzaldehyd; 2-Methyl-3-(4-methoxyphenyl)propanal; 2-Methyl-3-(4-methylendioxyphenyl)propanal;
der aromatischen und araliphatischen Ketone wie z.B. Acetophenon; 4-Methylacetophenon; 4-Methoxyacetophenon; 4-tert.-Butyl-2,6-dimethylacetophenon; 4-Phenyl-2-butanon; 4-(4-Hydroxyphenyl)-2-butanon; 1-(2-Naphthalenyl)ethanon;2-Benzofuranylethanon;(3-Methyl-2-benzofuranyl)ethanon; Benzophenon; 1,1,2,3,3,6-Hexamethyl-5-indanylmethylketon; 6-tert.-Butyl-1,1-dimethyl-4-indanylmethylketon; 1-[2,3-dihydro-1,1,2,6-tetramethyl-3-(1-methylethyl)-1 H-5-indenyl]ethanon; 5',6',7',8'-Tetrahydro-3',5',5',6',8',8'-hexamethyl-2-acetonaphthon;
der aromatischen und araliphatischen Carbonsäuren und deren Ester wie z.B. Benzoesäure; Phenylessigsäure; Methylbenzoat; Ethylbenzoat; Hexylbenzoat; Benzyl-benzoat; Methylphenylacetat; Ethylphenylacetat; Geranylphenylacetat; Phenylethyl-phenylacetat; Methylcinnmat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; Cis-3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;
der stickstoffhaltigen aromatischen Verbindungen wie z.B. 2,4,6-Trinitro-1,3-dimethyl-5-tert.-butylbenzol; 3,5-Dinitro-2,6-dimethyl-4-tert.-butylacetophenon; Zimtsäurenitril; 3-Methyl-5-phenyl-2-pentensäurenitril; 3-Methyl-5-phenylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-tert.-butylphenyl)propanal oder 2,4-Dimethyl-3-cyclohexencarbaldehyd; 6-Isopropylchinolin; 6-Isobutylchinolin; 6-sec.-Butylchinolin; 2-(3-Phenylpropyl)pyridin; Indol; Skatol; 2-Methoxy-3-isopropylpyrazin; 2-Isobutyl-3-methoxypyrazin;
der Phenole, Phenylether und Phenylester wie z.B. Estragol; Anethol; Eugenol; Eugenylmethylether; Isoeugenol; Isoeugenylmethylether; Thymol; Carvacrol; Diphenylether; beta-Naphthylmethylether; beta-Naphthylethylether; beta-Naphthylisobutylether; 1,4-Dimethoxybenzol; Eugenylacetat; 2-Methoxy-4-methylphenol; 2-Ethoxy-5-(1-propenyl)phenol; p-Kresylphenylacetat;
der heterocyclischen Verbindungen wie z.B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2-Ethyl-3-hydroxy-4H-pyran-4-on;
der Lactone wie z.B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid;4-Methyl-1,4-decanolid; 1,15-Pentadecanolid; cis- und trans-11-Pentadecen-1,15-olid; cis- und trans-12-Pentadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin.

Erfindungsgemäße Riech- oder Aromastoffkompositionen, die Nonenolid enthalten, können in flüssiger Form, unverdünnt oder mit einem Lösungsmittel verdünnt vorliegen und zur Parfümierung oder Aromatisierung eingesetzt werden. Geeignete Lösungsmittel hierfür sind z.B. Ethanol, Isopropanol, Diethylenglycolmonoethyleter, Glycerin, Propylenglycol, 1,2-Butylenglycol, Dipropylenglycol, Diethylphtalat, Triethylcitrat, Isopropylmyristat, Triacetin usw.

Des weiteren können erfindungsgemäße Riech- oder Aromastoffkompositionen, die Nonenolid enthalten, an einem Trägerstoff adsorbiert sein, der sowohl für eine feine Verteilung der Riech- oder Aromastoffe im Produkt als auch für eine kontrollierte Freisetzung bei der Anwendung sorgt. Derartige Träger können poröse anorganische Materialien wie Leichtsulfat, Kieselgele, Zeolithe, Gipse, Tone, Tongranulate, Gasbeton usw. oder organische Materialien wie Hölzer, Cellulose-basierende Stoffe, Zucker, Dextrine (z.B. Maltodextrin) oder Kunststoffe wie PVC, Polyvinylacetate oder Polyurethane sein. Die Kombination aus erfindungsgemäßer Komposition und Trägerstoff stellt einen beispielhaften erfindungsgemäßen Artikel dar.

Erfindungsgemäße Riech- oder Aromastoffkompositionen, die Nonenolid enthalten, können auch mikroverkapselt, sprühgetrocknet, als Einschluss-Komplexe oder als Extrusions-Produkte (d. h. erfindungsgemäße Artikel) vorliegen und in dieser Form z. B. einem zu parfümierenden oder aromatisierenden Produkt hinzugefügt werden.

Gegebenenfalls können die Eigenschaften der derart modifizierten Kompositionen durch sog. "Coaten" mit geeigneten Materialien im Hinblick auf eine gezieltere Duftfreisetzung weiter optimiert werden, wozu vorzugsweise wachsartige Kunststoffe wie z.B. Polyvinylalkohol verwendet werden. Die resultierenden Produkte stellen wiederum erfindungsgemäße Artikel dar.

Die Mikroverkapselung der erfindungsgemäßen Riech- oder Aromastoffkompositionen zu erfindungsgemäßen Artikeln kann beispielsweise durch das sogenannte Koazervationsverfahren (nahtlose Kapsel, vorzugsweise mit einer Umhüllung basierend auf Gelatine und/oder Alginat), mit Hilfe von Kapselmaterialien z.B. aus polyurethanartigen Stoffen oder Weichgelatine, erfolgen. Die sprühgetrockneten Riech- oder Aromastoffkompositionen können beispielsweise durch Sprühtrocknung einer die Riech- oder Aromastoffkomposition enthaltenden Emulsion, bzw. Dispersion hergestellt werden, wobei als Trägerstoffe modifizierte Stärken, Proteine, Dextrin und pflanzliche Gummen verwendet werden können. Einschluss-Komplexe können z.B. durch Eintragen von Dispersionen von der Riech- oder Aromastoffkomposition und Cyclodextrinen oder Harnstoffderivaten in ein geeignetes Lösungsmittel, z.B. Wasser, hergestellt werden. Extrusions-Produkte können durch Verschmelzen der Riech- oder Aromastoffkompositionen mit einem geeigneten wachsartigen Stoff und durch Extrusion mit nachfolgender Erstarrung, ggf. in einem geeigneten Lösungsmittel, z.B. Isopropanol, erhalten werden.

Riechstoffkompositionen, die Nonenolid enthalten, können in konzentrierter Form, in Lösungen oder in oben beschriebener modifizierter Form verwendet werden für die Herstellung von erfindungsgemäßen parfümierten Artikeln wie z.B. Parfüm-Extraits, Eau de Parfums, Eau de Toilettes, Rasierwässer, Eau de Colognes, Preshave-Produkte, Splash-Colognes und parfümierten Erfrischungstüchern sowie die Parfümierung von sauren, alkalischen und neutralen Reinigungsmitteln, wie z.B. Fußbodenreinigern, Fensterglasreinigern, Geschirrspülmittel, Bad- und Sanitärreinigern, Scheuermilch, festen und flüssigen WC-Reinigern, pulver- und schaumförmigen Teppichreinigern, Textilerfrischern, Bügelhilfen, flüssigen Waschmitteln, pulverförmigen Waschmitteln, Wäschevorbehandlungsmitteln wie Bleichmittel, Einweichmittel und Fleckenentfernern, Wäscheweichspülern, Waschseifen, Waschtabletten, Desinfektionsmitteln, Oberflächendesinfektionsmitteln sowie von Luftverbesserern in flüssiger, gelartiger oder auf einem festen Träger aufgebrachter Form, Aerosolsprays, Wachsen und Polituren wie Möbelpolituren, Fußbodenwachsen, Schuhcremes sowie Körperpflegemitteln wie z.B. festen und flüssigen Seifen, Duschgelen, Shampoos, Rasierseifen, Rasierschäumen, Badeölen, kosmetischen Emulsionen vom Öl-in-Wasser-, vom Wasser-in-Öl- und vom Wasser-in-Öl-in-Wasser-Typ wie z.B. Hautcremes- und - lotionen, Gesichtscremes und -lotionen, Sonnenschutzcremes-und -lotionen, After-sun-cremes und -lotionen, Handcremes und -lotionen, Fußcremes und - lotionen, Enthaarungscremes und -lotionen, After-shave-Cremes und -lotionen, Bräunungscremes und -lotionen, Haarpflegeprodukten wie z.B. Haarsprays, Haargelen, festigenden Haarlotionen, Haarspülungen, permanenten und semipermanenten Haarfärbemitteln, Haarverformungsmitteln wie Kaltwellen und Haarglättungsmitteln, Haarwässern, Haarcremes und -lotionen, Deodorantien und Antiperspirantien wie z.B. Achselsprays, Roll-ons, Deosticks, Deocremes, Produkten der dekorativen Kosmetik wie z.B. Lidschatten, Nagellacke, Make-ups, Lippenstifte, Mascara sowie von Kerzen, Lampenölen, Räucherstäbchen, Insektiziden, Repellentien und Treibstoffen.

Das erfindungsgemäß einzusetzende Nonenolid kann in aromatisierte oder zu aromatisierende Artikel eingearbeitet werden, insbesondere in der Ernährung, der Mundpflege oder dem Genuss dienende Zubereitungen.

Der Ernährung oder dem Genuss dienende Zubereitungen sind z.B. Backwaren (z.B. Brot, Trockenkekse, Kuchen, sonstiges Gebäck), Süßwaren (z.B. Schokoladen, Schokoladenriegelprodukte, sonstige Riegelprodukte, Fruchtgummi, Hart- und Weichkaramellen, Kaugummi), alkoholische oder nicht-alkoholische Getränke (z.B. Kaffee, Tee, Wein, weinhaltige Getränke, Bier, bierhaltige Getränke, Liköre, Schnäpse, Weinbrände, (fruchthaltige) Limonaden, isotonische Getränke, Erfrischungsgetränke, Nektare, Obst- und Gemüsesäfte, Frucht- oder Gemüsesaftzubereitungen), Instantgetränke (z.B. Instant-Kakao-Getränke, Instant-Tee-Getränke, Instant-Kaffeegetränke), Fleischprodukte (z.B. Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (z.B. Frühstückscerealien, Müsliriegel, vorgegarte Fertigreis-Produkte), Milchprodukte (z.B. Milchgetränke, Milcheis, Joghurt, Kefir, Frischkäse, Weichkäse, Hartkäse, Trockenmilchpulver, Molke, Butter, Buttermilch, teilweise oder ganz hydrolisierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, in Essig eingelegte Gemüse, eingekochte Gemüse), Knabberartikel (z.B. gebackene oder frittierte Kartoffelchips oder Kartoffelteigprodukte, Brotteigprodukte, Extrudate auf Mais- oder Erdnussbasis), Produkte auf Fett- und Ölbasis oder Emulsionen derselben (z.B. Mayonnaise, Remoulade, Dressings, Würzzubereitungen), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden. Nach Einarbeiten der erfindungsgemäßen Verbindung sind diese Zubereitungen erfindungsgemäße Zubereitungen (als Beispiel erfindungsgemäßer Artikel).

Erfindungsgemäße Zubereitungen können z. B. als Halbfertigware oder als Würzmischung vorliegen.

Erfindungsgemäße Zubereitungen können insbesondere als Halbfertigware zur Herstellung weiterer der Ernährung oder dem Genuss dienenden Zubereitungen dienen, insbesondere in sprühgetrockneter Form. Erfindungsgemäße Zubereitungen können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Bevorzugte zum Verzehr geeignete Produkte sind beispielsweise Backwaren (Kekse, Kuchen, Muffins, Waffeln, Backmischungen), Zuckerwaren (Hartkaramellen, Weichkaramellen, Kaubonbons, Komprimate, Dragees, Zuckerperlen, Zuckerfüllungen), Milchprodukte (Joghurts, Puddings, Eiscreme), Schokoladenwaren (weiße, helle oder dunkle Schokolade, Schokoladenriegel), Fettmassen (Backwarenfüllungen wie z.B. Keksfüllungen, Schokoladenfettfüllungen, Riegelfettfüllungen), Kaugummis (zuckerfrei, zuckerhaltig, Streifen, Komprimate, Dragees), Snacks und Snackmischungen, wasserlösliche Pulverprodukte, Aufstreumischungen (Toppings), vergleiche auch die obigen Ausführungen zu bevorzugten (gebrauchsfertigen) erfindungsgemäßen Zubereitungen.

Weitere übliche Wirk-, Grund-, Hilfs- und Zusatzstoffe für der Ernährung, der Mundpflege oder dem Genuss dienende erfindungsgemäße Zubereitungen können in Mengen von 5 bis 99,9 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,9 Gew.-%, vorzugsweise 5 bis 80 Gew.-%, bezogen auf das Gesamtgewicht der Zubereitung, aufweisen.

Die erfindungsgemäßen Zubereitungen (als Beispiele erfindungsgemäßer Artikel), enthaltend eine erfindungsgemäße Riech- oder Aromastoffmischung, werden gemäß einer bevorzugten Ausgestaltung hergestellt, indem das Nonenolid als Substanz, als Lösung (z.B. in Ethanol, Wasser oder 1,2-Propylenglycol) oder in Form eines Gemisches mit einem festen oder flüssigen Trägerstoff (z.B. Maltodextrin, Stärke, Silicagel), sonstigen Aromen oder Aromastoffen und gegebenfalls weiteren Hilfsmitteln und/oder Stabilisatoren (z.B. natürliche oder künstliche Polysaccharide und/oder Pflanzengummen wie modifizierte Stärken oder Gummi Arabicum) in eine der Ernährung, der Mundpflege oder dem Genuss dienende Basis-Zubereitung eingearbeitet werden. Vorteilhafterweise können als Lösung und/oder Suspension oder Emulsion vorliegende erfindungsgemäße Zubereitungen auch durch Sprühtrocknung in eine feste erfindungsgemäße Zubereitung (Halbfertigware) überführt werden. Als sonstige Aromen oder Aromastoffe werden dabei insbesondere - wie vorstehend ausgeführt - eine, mehrere oder sämtliche Verbindungen ausgewählt aus der Gruppe bestehend aus (i) Menthol, (ii) (-)-Carvon, (iii) Menthon und (iv) Isomenthon sowie vorzugsweise (c) 4-Methyl-5-hydroxy-hexansäurelacton und/oder (d) Menthylacetat eingesetzt.

Die erfindungsgemäßen sprühgetrockneten festen Zubereitungen (als Beispiel erfindungsgemäßer Artikel) sind als Halbfertigwaren besonders gut zur Herstellung von weiteren erfindungsgemäßen Zubereitungen geeignet. In den erfindungsgemäßen sprühgetrockneten festen Zubereitungen sind vorzugsweise 50 bis 95 % Gew.-% Trägerstoffe, insbesondere Maltodextrin und/oder Stärke, 5 bis 40 % Hilfsstoffe, bevorzugt natürliche oder künstliche Polysaccharide und/oder Pflanzengummen wie modifizierte Stärken oder Gummi Arabicum enthalten.

Gemäß einer weiteren bevorzugten Ausführungsform werden zur Herstellung erfindungsgemäßer Zubereitungen das erfindungsgemäß einzusetzende Nonenolid bzw. eine erfindungsgemäße Riech- oder Aromastoffkomposition und gegebenenfalls andere Bestandteile der erfindungsgemäßen Zubereitung zunächst in Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten (z.B. modifizierte Stärke), Cellulose oder Cellulosederivaten (z.B. Hydroxypropylcellulose), anderen Polysacchariden (z.B. Dextrin, Alginat, Curdlan, Carageenan, Chitin, Chitosan, Pullulan), natürlichen Fetten, natürlichen Wachsen (z.B. Bienenwachs, Carnaubawachs), aus Proteinen, z.B. Gelatine oder sonstigen Naturprodukten (z.B. Schellack) eingearbeitet. Dabei können je nach Matrix die Produkte durch Sprühtrocknung, Sprühgranulation, Schmelzgranulation, Koazervation, Koagulation, Extrusion, Schmelzextrusion, Emulsionsverfahren, Beschichtung (Coating) oder andere geeignete Verkapselungsverfahren und gegebenenfalls eine geeignete Kombination der vorgenannten Verfahren erhalten werden. In einem weiteren bevorzugten Herstellungsverfahren für eine erfindungsgemäße Zubereitung wird das Nonenolid bzw. eine erfindungsgemäße Riech- oder Aromastoffkomposition umfassend Nonenolid zunächst mit einem oder mehreren geeigneten Komplexbildnern, beispielsweise mit Cyclodextrinen oder Cyclodextrinderivaten, bevorzugt α- oder β-Cyclodextrin, komplexiert und in dieser komplexierten Form eingesetzt.

Besonders bevorzugt ist eine erfindungsgemäße Zubereitung, bei der die Matrix so gewählt ist, dass Nonenolid bzw. eine erfindungsgemäße Riech- oder Aromastoffkomposition verzögert von der Matrix freigegeben wird, so dass eine langanhaltende Wirkung erzielt wird. Besonders bevorzugt ist insoweit eine Fett-, Wachs-, Polysaccharid- oder Proteinmatrix.

Als weitere Bestandteile für erfindungsgemäße, der Ernährung oder dem Genuss dienende Zubereitungen können übliche Grund-, Hilfs- und Zusatzstoffe für Nahrungs- oder Genussmittel verwendet werden, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose, Tagatose), Zuckeralkohole (z.B. Sorbit, Erythritol), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nichtproteinogene Aminosäuren und verwandte Verbindungen (z.B. γ-Aminobuttersäure, Taurin), Peptide (z.B. Glutahthion), native oder prozessierte Proteine (z.B. Gelatine), Enzyme (z.B. Peptidasen), Nukleinsäuren, Nucleotide, Geschmackskorrigenzien für unangenehme Geschmackseindrücke, weitere Geschmacksmodulatoren für weitere, in der Regel nicht unangenehme Geschmackseindrücke, andere geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole, Gummi arabicum), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), Bitterstoffe (z.B. Chinin, Coffein, Limonin, Amarogentin, Humolone, Lupolone, Catechine, Tannine), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, synthetische, natürliche oder naturidentische Aromastoffe oder Riechstoffe sowie Geruchskorrigentien.

Zahnpflegemittel (als Basis für der Mundpflege dienende erfindungsgemäße Zubereitungen), die erfindungsgemäß einzusetzende Nonenolid bzw. eine erfindungsgemäße Nonenolid umfassende Riech- oder Aromastoffkomposition enthalten, umfassen im Allgemeinen ein abrasives System (Schleif- oder Poliermittel), wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{®}, Süßstoffe, wie z.B. Saccharin, Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffen wie z.B. Mentholderivate (z.B. L-Menthyllactat, L-Menthylalkylcarbonate, Menthonketale, Menthancarbonsäureamide), 2,2,2-Trialkylessigsäureamiden (z.B. 2,2-Diisopropylpropionsäuremethylamid), Icilin und Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen und/oder Natriumbicarbonat oder Geruchskorrigentien.

Kaugummis (als weiteres Beispiel für der Mundpflege dienende erfindungsgemäße Zubereitungen), welche das erfindungsgemäß einzusetzende Nonenolid bzw. eine erfindungsgemäße Nonenolid enthaltende Riech- oder Aromastoffkomposition enthalten, umfassen im allgemeinen eine Kaugummibase, d.h. eine beim Kauen plastisch werdende Kaumasse, Zucker verschiedener Arten, Zuckeraustauschstoffe, andere süß schmeckende Stoffe, Zuckeralkohole (insbesondere Sorbitol, Xylitol, Mannitol), Kühlwirkstoffe, Geschmackskorrigenzien für unangenehme Geschmackseindrücke, andere Geschmacksmodulatoren für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Feuchthaltemittel, Verdicker, Emulgatoren, Aromen und Stabilisatoren oder Geruchskorrigentien.

Im Stand der Technik sind zahlreiche unterschiedliche Kaugummibasen bekannt, wobei zwischen sogenannten "chewing gum" - oder um "bubble gum" - Basen zu unterscheiden ist, wobei letztere weicher sind, damit sich damit auch Kaugummiblasen bilden lassen. Gängige Kaugummibasen umfassen neben traditionell eingesetzten natürlichen Harzen oder dem Naturlatex Chicle heute zumeist Elastomere wie Polyvinylacetate (PVA), Polyethylene, (nieder- oder mittelmolekulare) Polyisobutene (PIB), Polybutadiene, Isobuten-Isopren Copolymere (Butyl Rubber), Polyvinylethylether (PVE), Polyvinylbutylether, Copolymere von Vinylestern und Vinylethern, Styrol-Butadien-Copolymere (Styrol-Butadien-Rubber, SBR) oder Vinyl-Elastomere, z.B. auf Basis Vinylacetat/Vinyllaurat, Vinylacetat/Vinylstaerat oder Ethylen/Vinylacetat, sowie Mischungen der genannten Elastomere, wie beispielsweise in EP 0 242 325, US 4,518,615, US 5,093,136, US 5,266,336 US 5,601,858 oder US 6,986,709 beschrieben. Daneben umfassen Kaugummibasen weitere Bestandteile wie beispielsweise (mineralische) Füllstoffe, Weichmacher, Emulgatoren, Antioxidantien, Wachse, Fette oder fette Öle, wie beispielsweise gehärtete (hydrierte) pflanzliche oder tierische Fette, Mono-, Di- oder Triglyceride. Geeignete (mineralische) Füllstoffe sind beispielsweise Calciumcarbonat, Titandioxid, Siliciumdioxid, Talkum, Aluminiumoxid, Dicalciumphosphat, Tricalciumphosphat, Magnesiumhydroxid und deren Mischungen. Geeignete Weichmacher bzw. Mittel zur Verhinderung des Verklebens (detackifier) sind beispielsweise Lanolin, Stearinsäure, Natriumstearat, Ethylacetat, Diacetin (Gylcerindiacetat), Triacetin (Gylcerintriacetat), Triethylcitrat. Geeignete Wachse sind beispielsweise Paraffin Wachse, Candelilla Wachs, Carnauba Wachs, mikrokristalline Wachse und Polyethylen Wachse. Geeignete Emulgatoren sind beispielsweise Phosphatide wie Lecithin, Mono- und Diglyceride von Fettsäuren, z.B. Glycerin-monostearat.

Nachfolgend wird die Erfindung anhand von Beispielen näher erläutert. Sofern nicht anders angegeben, beziehen sich alle Angaben auf das Gewicht.

### Beispiel 1: Darstellung von Nonenolid

### 1. Stufe: 3,4-Epoxynonansäureethylester

Zu einer Lösung aus 34,5 g meta-Chlorperbenzoesäure (75%ig, 150 mmol) in 250 mL Dichlormethan tropfte man bei 5 °C eine Lösung aus 27,6 g 3-Nonensäureethylester (93,5%ig, 150 mmol) in 50 mL Dichlormethan. Man rührte 1 h bei 5 °C und anschließend 16 h bei Raumtempertatur. Nicht umgesetzte meta-Chlorperbenzoesäure wurde per Filtration abgetrennt und das Filtrat 30 min mit 10 g Calciumhydroxid gerührt. Man filtrierte vom Calciumchlorbenzoat ab und spülte den Filterkuchen mit 100 mL Dichlormethan nach. Das Filtrat wurde mit Natriumsulfat getrocknet und am Rotationsverdampfer eingeengt. Man erhielt 24,6 g rohen 3,4-Epoxynonansäureethylester (gemäß GC 93 %ig).

### 2. Stufe: 4-Hydroxy-5-pentyl-dihydro-furan-2-on

Zu einer Lösung von 24,6 g des aus der 1. Stufe erhaltenen 3,4-Epoxynonansäureethylesters (ca.120 mmol) in 150 mL Tetrahydrofuran tropfte man 150 mL verdünnte Schwefelsäure (50 %ig). Man kochte 3 Stunden unter Rückfluß, versetzte mit 150 mL Wasser und extrahierte 3 mal mit 150 mL Diethylether. Die vereinigten organischen Phasen wurden mit jeweils 100 mL gesättigter NaCl-Lösung und Natriumhydrogencarbonatlösung gewaschen, über Natriumsulfat getrocknet und im Vakuum eingeengt. Man erhielt 9,47 g an rohem 4-Hydroxy-5-pentyl-dihydro-furan-2-on, welche ohne weitere Aufreinigung in der Folgestufe eingesetzt wurden.

### 3. Stufe: 5-Pentyl-5H-furan-2-on

Zu einer Lösung von 9,47 g des aus der 2. Stufe erhaltenen 4-Hydroxy-5-pentyldihydro-furan-2-ons (ca. 55 mmol) und 12,2 g Triethylamin (121 mmol) in 150 mL Dichlormethan tropfte man unter Kühlung 4,7 mL Methansulfonsäurechlorid so zu, dass eine Temperatur von 10 °C nicht überschritten wurde. Man rührte 45 min bei 5 °C nach, verdünnte die Reaktionsmischung mit 150 mL Dichlormethan, gefolgt von Wäschen mit jeweils 50 mL Wasser, HCI-Lösung (10%ig) und Hydrogencarbonatlösung, trocknete über Natriumsulfat und engte zuletzt im Vakuum ein. Das Rohprodukt wurde durch Chromatographie an Kieselgel aufgereinigt (Hexan/Diethylether = 3/1 (v/v)). Man erhielt 5,2 g 5-Pentyl-5H-furan-2-on (laut GC >96%).

IR (condensed phase) = 1751, 1163, 817 cm⁻¹.

¹H-NMR (CDCl₃): δ = 0.90 (t, *J* = -7.0 Hz, 3 H), 1.26-1.37 (m, 4 H), 1.39-1.52 (m, 2 H), 1.61-1.82 (m, 2 H), 5.04 (m_{c}, 1 H), 6.12 (dd, *J* = 5.7, 2.0 Hz, 1 H), 7.45 (dd, *J* = 5.7, 1.5 Hz, 1 H).

¹³C-NMR (CDCl₃): δ = 13.94, 22.42, 24.65, 31.46, 33.12, 83.57, 121.3, 156.8, 173.3.

m/z = 154 (M⁺, 3), 126 (12), 125 (36), 99 (15), 98 (11), 97 (14), 84 (81), 83 (21), 71 (14), 55 (74), 43 (100), 42 (11), 41 (38), 39 (21).

### Beispiel 2: Aromastoffkompositionen (synthetische Pfefferminzöle)

| | **Aroma P** Gewichtsteile | **Aroma A1** Gewichtsteile | **Aroma A2** Gewichtsteile |
|---|---|---|---|
| Isobutyraldehyd | 0,5 | 0,5 | 0,5 |
| 3-Octanol | 0,5 | 0,5 | 0,5 |
| Dimethylsulfid | 0,5 | 0,5 | 0,5 |
| Trans-2-Hexenal | 1,0 | 1,0 | 1,0 |
| Cis-3-Hexenol | 1,0 | 1,0 | 1,0 |
| 4-Terpineol, natürlich | 1,0 | 1,0 | 1,0 |
| Isopulegol | 1,0 | 1,0 | 1,0 |
| Piperiton, natürlich, aus Eucalyptus | 2,0 | 2,0 | 2,0 |
| Linalool | 3,0 | 3,0 | 3,0 |
| 8-Ocimenylactetat, 10% in Triacetin | 5,0 | 5,0 | 5,0 |
| Isoamylalkohol | 10,0 | 10,0 | 10,0 |
| Isovaleraldehyd | 10,0 | 10,0 | 10,0 |
| Alpha-Pinen | 25,0 | 25,0 | 25,0 |
| Beta-Pinen, natürlich | 25,0 | 25,0 | 25,0 |
| Neomenthol, racemisch | 40,0 | 40,0 | 40,0 |
| Eucalyptol (1,8-Cineol), natürlich | 50,0 | 50,0 | 50,0 |
| L-Menthylacetat der Formel D | 70,0 | 70,0 | 70,0 |
| L-Menthon | 220,0 | 220,0 | 220,0 |
| D-Isomenthon | 50,0 | 50,0 | 50,0 |
| L-Menthol | 482,5 | 482,5 | 482,5 |
| Nonenolid der Formel A, racemisch | - | 1,0 | 1,0 |
| 4-Methyl-5-hydroxy-hexansäurelacton der Formel C | - | - | 1,0 |
| Total: | 998,0 | 999,0 | 1000,0 |

Nach Meinung der Flavoristen bekommt das Aroma P (nicht erfindungsgemäß), eine nicht-natürliche Nachstellung eines Pfefferminzöls, durch den Zusatz von 1 Gewichtsteil racemischem Nonenolid (Aroma A1) eine Note von Heu und Cumarin. Nonenolid fügt sich gut in die Komposition ein, verleiht der Komposition mehr Natürlichkeit und Authentizität und rundet diese ab. Diese Noten bzw. Effekte werden durch den weiteren Zusatz von 1 Gewichtsteil 4-Methyl-5-hydroxyhexansäurelacton (Aroma A2) noch verstärkt.

### Formulierungsbeispiele

### Beispiel F1: Gel-Zahncreme mit Wirksamkeit gegen Mundgeruch

| | I (Gew.-%) | II (Gew.-%) | III (Gew.-%) |
|---|---|---|---|
| Na-carboxymethylcellulose | 0,40 | 0,40 | 0,40 |
| Sorbitol 70 %, in Wasser | 72,00 | 72,00 | 72,00 |
| Polyethylenglykol (PEG) 1500 | 3,00 | 3,00 | 3,00 |
| Na-saccharinat | 0,07 | 0,07 | 0,07 |
| Na-fluorid | 0,24 | 0,24 | 0,24 |
| p-Hydroxybenzoesäure (PHB)-Ethylester | 0,15 | 0,15 | 0,15 |
| Aroma A1 aus Beispiel 2 | 0,50 | 0,80 | 1,50 |
| Abrasivkieselsäure | 11,00 | 11,00 | 11,00 |
| Verdickungskieselsäure | 6,00 | 6,00 | 6,00 |
| Natriumdodecylsulfat (SDS) | 1,40 | 1,40 | 1,40 |
| Wasser dest. | Ad 100,00 | Ad 100,00 | Ad 100,00 |

### Beispiel F2: Zahncreme gegen Plaque

| | I (Gew.-%) | II (Gew.-%) | III (Gew.-%) |
|---|---|---|---|
| Na-carboxymethylcellulose | 1,00 | 1,00 | 1,00 |
| Glycerin | 12,50 | 12,50 | 12,50 |
| Sorbitol 70 %, in Wasser | 29,00 | 29,00 | 29,00 |
| Na-saccharinat | 0,20 | 0,20 | 0,20 |
| Na-fluorid | 0,22 | 0,22 | 0,22 |
| Azacycloheptan-2,2-diphosphosäure, Di-natriumsalz | 1,00 | 1,00 | 1,00 |
| Bromchlorophen | 0,10 | 0,10 | 0,10 |
| Aroma A2 aus Beispiel 2 | 0,15 | 0,90 | 1,20 |
| Abrasivkieselsäure | 15,00 | 15,00 | 15,00 |
| Verdickungskieselsäure | 5,00 | 5,00 | 5,00 |
| Natriumdodecylsulfat (SDS) | 1,50 | 1,50 | 1,50 |
| Wasser dest. | Ad 100,00 | Ad 100,00 | Ad 100,00 |

### Beispiel F3: Zahncreme gegen Plaque

| | I (Gew.-%) | II (Gew.-%) | III (Gew.-%) |
|---|---|---|---|
| Carragenan | 0,90 | 0,90 | 0,90 |
| Glycerin | 15,00 | 15,00 | 15,00 |
| Sorbitol 70 %, in Wasser | 25,00 | 25,00 | 25,00 |
| PEG 1000 | 3,00 | 3,00 | 3,00 |
| Na-fluorid | 0,24 | 0,24 | 0,24 |
| Tetrakalium-diphosphat | 4,50 | 4,50 | 4,50 |
| Tetranatrium-diphosphat | 1,50 | 1,50 | 1,50 |
| Na-saccharinat | 0,40 | 0,40 | 0,40 |
| Fällungskieselsäure | 20,00 | 20,00 | 20,00 |
| Titandioxid | 1,00 | 1,00 | 1,00 |
| PHB-Methylester | 0,10 | 0,10 | 0,10 |
| Anethol-Eucalyptol - Aroma | 0,10 | 0,25 | 0,20 |
| Aroma A1 aus Beispiel 2 | 0,50 | 0,70 | 1,00 |
| Natriumdodecylsulfat | 1,30 | 1,30 | 1,30 |
| Wasser dest. | Ad 100,00 | Ad 100,00 | Ad 100,00 |

### Beispiel F4: Zahncreme gegen empfindliche Zähne

| | I (Gew.-%) | II (Gew.-%) | III (Gew.-%) |
|---|---|---|---|
| Na-carboxymethylcellulose | 0,70 | 0,70 | 0,70 |
| Xanthan Gum | 0,50 | 0,50 | 0,50 |
| Glycerin | 15,00 | 15,00 | 15,00 |
| Sorbitol 70 %, in Wasser | 12,00 | 12,00 | 12,00 |
| K-nitrat | 5,00 | 5,00 | 5,00 |
| Na-monofluorphosphat | 0,80 | 0,80 | 0,80 |
| PHB-Methylester | 0,15 | 0,15 | 0,15 |
| PHB-Propylester | 0,05 | 0,05 | 0,05 |
| Na-saccharinat | 0,20 | 0,20 | 0,20 |
| Wintergrün - Aroma (enthält Methylsalicylat) | 0,05 | 0,15 | 0,10 |
| Aroma A1 aus Beispiel 2 | 0,25 | 0,65 | 1,10 |
| Ca-carbonat | 35,00 | 35,00 | 35,00 |
| Siliciumdioxid | 1,00 | 1,00 | 1,00 |
| Natriumdodecylsulfat (SDS) | 1,50 | 1,50 | 1,50 |
| Wasser dest. | Ad 100,00 | Ad 100,00 | Ad 100,00 |

### Beispiel F5: Zahncreme gegen empfindliche Zähne

| | I (Gew.-%) | II (Gew.-%) | III (Gew.-%) |
|---|---|---|---|
| Hydroxyethylcellulose | 1,40 | 1,40 | 1,40 |
| Guar Gum | 0,60 | 0,60 | 0,60 |
| Glycerin | 18,00 | 18,00 | 18,00 |
| Sorbitol 70 %, in Wasser | 12,00 | 12,00 | 12,00 |
| Na-Saccharinat | 0,35 | 0,35 | 0,35 |
| Farbstoff | 0,01 | 0,01 | 0,01 |
| PHB-Methylester | 0,15 | 0,15 | 0,15 |
| PHB-Propylester | 0,04 | 0,04 | 0,04 |
| Sr-chlorid | 10,50 | 10,50 | 10,50 |
| Aroma A2 aus Beispiel 2 | 0,40 | 1,00 | 1,50 |
| Fällungskieselsäure | 15,00 | 15,00 | 15,00 |
| Siliciumdioxid | 1,60 | 1,60 | 1,60 |
| Natriumdodecylsulfat | 1,30 | 1,30 | 1,30 |
| Wasser dest. | Ad 100,00 | Ad 100,00 | Ad 100,00 |

### Beispiel F6: Gebrauchsfertiges Mundwasser mit Fluorid

| | I (Gew.-%) | II (Gew.-%) | III (Gew.-%) |
|---|---|---|---|
| Ethanol | 7,00 | 7,00 | 7,00 |
| Glycerin | 12,00 | 12,00 | 12,00 |
| Na-fluorid | 0,05 | 0,05 | 0,05 |
| Pluronic F-127^{®} (BASF, oberflächenaktive Substanz) | 1,40 | 1,40 | 1,40 |
| Na-phosphatpuffer pH 7,0 | 1,10 | 1,10 | 1,10 |
| Sorbinsäure | 0,20 | 0,20 | 0,20 |
| Na-saccharinat | 0,10 | 0,10 | 0,10 |
| Aroma A2 aus Beispiel 2 | 0,10 | 0,25 | 0,40 |
| Farbstoff | 0,01 | 0,01 | 0,01 |
| Wasser dest. | Ad 100,00 | Ad 100,00 | Ad 100,00 |

### Beispiel F7: Mundwasserkonzentrat

| | I (Gew.-%) | II (Gew.-%) | III (Gew.-%) |
|---|---|---|---|
| Ethanol, 95%ig | 80,00 | 80,00 | 80,00 |
| Na-cyclamat | 0,15 | 0,15 | 0,15 |
| Eucalyptol -Aroma (enthält natürliches Eucalyptol) | 1,00 | 1,00 | 1,00 |
| Farbstoff | 0,01 | 0,01 | 0,01 |
| Aroma A1 aus Beispiel 2 | 2,00 | 3,00 | 4,00 |
| Wasser dest. | Ad 100,00 | Ad 100,00 | Ad 100,00 |

### Beispiel F8: Zuckerhaltige Kaugummis

| | I (Gew.-%) | II (Gew.-%) | III (Gew.-%) |
|---|---|---|---|
| Kaugummibase | 21,00 | 21,00 | 21,00 |
| Glucose Sirup | 16,50 | 16,50 | 16,50 |
| Glycerin | 0,50 | 0,50 | 0,50 |
| Puderzucker | 60,45 | 60,40 | 60,30 |
| Verkapseltes Wintergrün-Aroma (enthält Methylsalicylat) | 1,20 | 1,00 | 0,70 |
| Aroma A2 aus Beispiel 2 | 0,35 | 0,60 | 1,00 |

### Beispiele F9a - 9d: Zuckerfreie Kaugummis

### Beispiel F9a: Non-stick Kaugummi

Die Kaugummibase K1 bestand aus 2,0% Butyl Rubber (Isobuten-Isopren-Copolymer, MW 400000), 6,0% Polyisobuten (MW = 43800), 43,5% Polyvinylacetat (MW = 12000), 31,5% Polyvinylacetat (MW = 47000), 6,75% Triacetin und 10,25% Calciumcarbonat. Die Herstellung der Kaugummibase K1 und der Kaugummis kann analog zu US 5,601,858 erfolgen.

| | I (Gew.-%) | II (Gew.-%) | III (Gew.-%) |
|---|---|---|---|
| Kaugummibase K1 | 26,00 | 26,00 | 26,00 |
| Triacetin | 0,25 | 0,25 | 0,25 |
| Lecithin | 0,50 | 0,50 | 0,50 |
| Sorbitol, kristallin | 40,90 | 40,60 | 40,50 |
| Mannitol | 15,30 | 15,20 | 15,10 |
| Glycerin | 12,10 | 12,00 | 11,80 |
| Aspartam | 0,17 | 0,17 | 0,17 |
| Verkapseltes Aspartam | 1,08 | 1,08 | 1,08 |
| Amorphes Silica | 1,00 | 1,00 | 1,00 |
| Baumwollsamenöl | 0,50 | 0,50 | 0,50 |
| Polyoxyethylen-sorbitan-monolaurat (E-432) | 1,00 | 1,00 | 1,00 |
| Verkapseltes Spearmint-Aroma (enthält I-Carvon) | 0,20 | 0,10 | 0,20 |
| Verkapseltes Wintergrün-Aroma (enthält Methylsalicylat) | - | 0,20 | - |
| Aroma A1 aus Beispiel 2 | 1,00 | 1,40 | 1,70 |
| I-Menthyl-I-lactat | 0,10 | - | 0,20 |

### Beispiel F9b: Bubble gum

Die Herstellung der Bubble Gums kann analog zu US 5,093,136 erfolgen.

| | I (Gew.-%) | II (Gew.-%) |
|---|---|---|
| Styrol-Butadien-Copolymer (SBR) | 19,50 | 17,50 |
| Polyisobuten | 8,00 | 8,00 |
| Sorbitol Pulver | 49,19 | 47,19 |
| Sorbitol, 70 %, in Wasser | 9,20 | 22,20 |
| Hydrierte Stärkehydrolysate (HSH) | 9,00 | - |
| Glycerin | 3,00 | 2,00 |
| Aspartam | 0,10 | 0,10 |
| Verkapseltes Aspartam | 0,50 | 0,50 |
| Grüner und blauer Farbstoff | 0,01 | 0,01 |
| Aroma A2 aus Beispiel 2 | 1,50 | 2,50 |

Die Kaugummis der Rezeptur (I) wurden als kompakte Kugeln, die der Rezeptur (II) als Hohlkugeln ausgeformt.

### Beispiel F9c:

Die Kaugummibase K2 bestand aus 28,5% Terpenharz, 33,9% Polyvinylacetat (MW = 14000), 16,25% hydriertes Pflanzenöl, 5,5% Mono- und Diglyceride, 0,5% Polyisobuten (MW 75000), 2,0% Butyl Rubber (Isobuten-Isopren-Copolymer), 4,6% amorphes Siliciumdioxid (Wassergehalt ca. 2,5%), 0,05% Antioxidans tert.-Butylhydroxytoluol (BHT), 0,2% Lecitihin, und 8,5% Calciumcarbonat. Die Herstellung der Kaugummibase K2 und der Kaugummis kann analog zu US 6,986,907 erfolgen.

| | I (Gew.-%) | II (Gew.-%) | III (Gew.-%) |
|---|---|---|---|
| Kaugummibase K2 | 25,30 | 27,30 | 26,30 |
| Sorbitol | 61,48 | 59,48 | 61,80 |
| Glycerin | 2,40 | 2,40 | 2,40 |
| Lecithin | 7,00 | 7,00 | 7,00 |
| Aspartam | 0,14 | 0,14 | 0,14 |
| Verkapseltes Aspartam | 0,68 | 0,68 | 0,68 |
| Menthol, sprühgetrocknet | 0,50 | - | - |
| Kirscharoma, sprühgetrocknet | - | 1,20 | - |
| Aroma A1 aus Beispiel 2, sprühgetrocknet | 1,50 | 1,80 | - |
| Aroma A2 aus Beispiel 2 | 1,00 | - | 1,68 |

Die Kaugummis der Rezeptur (I) und (II) wurden als Streifen, die der Rezeptur (III) als Pellets ausgeformt.

### Beispiel F9d:

| | I (Gew.-%) | II (Gew.-%) | III (Gew.-%) |
|---|---|---|---|
| Kaugummibase | 30,00 | 30,00 | 30,00 |
| Sorbit, Pulver | 38,45 | 38,40 | 38,30 |
| Palatinit | 9,50 | 9,50 | 9,50 |
| Xylit | 2,00 | 2,00 | 2,00 |
| Mannit | 3,00 | 3,00 | 3,00 |
| Aspartam | 0,10 | 0,10 | 0,10 |
| Acesulfam K | 0,10 | 0,10 | 0,10 |
| Emulgum / Emulgator | 0,30 | 0,30 | 0,30 |
| Sorbitol 70 %, in Wasser | 14,00 | 14,00 | 14,00 |
| Glycerin | 1,00 | 1,00 | 1,00 |
| Anis-Zimt-Aroma | 1,10 | 0,60 | 0,50 |
| Aroma A1 aus Beispiel 2 | 0,45 | 0,80 | 1,00 |
| I-Menthyl-I-lactat | - | 0,20 | 0,10 |
| 2-Hydroxypropyl-menthylcarbonat | - | | 0,10 |

### Beispiel F10: Gelatinekapsel zum Direktverzehr

| | I (Gew.-%) | II (Gew.-%) | III (Gew.-%) |
|---|---|---|---|
| Gelatinehülle: | | | |
| Glycerin | 2,014 | 2,014 | 2,014 |
| Gelatine 240 Bloom | 7,91 | 7,91 | 7,91 |
| Sucralose | 0,065 | 0,065 | 0,065 |
| Allura Rot | 0,006 | 0,006 | 0,006 |
| Brillantblau | 0,005 | 0,005 | 0,005 |
| | | | |
| Kernzusammensetzung: | | | |
| Pflanzenöl-Triglycerid (Kokosöl - Fraktion) | 79,39 | 68,40 | 58,25 |
| Aroma A2 aus Beispiel 2 | 10,0 | 20,0 | 28,65 |
| Neotam und Aspartam | 0,01 | 0,05 | - |
| Sucralose | 0,22 | 0,30 | 0,70 |
| 2-Hydroxypropyl-menthylcarbonat | 0,33 | 0,20 | - |
| 2-Hydroxyethylmenthyl-carbonat | - | 0,20 | 1,00 |
| (1 R,3R,4S) Menthyl-3-carbonsäure-N-ethylamid (WS-3) | - | 0,55 | 0,50 |
| (-)-Menthonglycerinacetal (Frescolat MGA) | - | 0,30 | 0,80 |
| Vanillin | 0,05 | - | 0,10 |

Die zum Direktverzehr geeignete Gelatinekapsel wurde gemäß WO 2004/050069 hergestellt und hatte einen Durchmesser von 5 mm, das Gewichtsverhältnis von Kernmaterial zu Hüllmaterial lag bei 90 : 10. Die Kapsel öffnete sich im Mund innerhalb von weniger als 10 Sekunden und löste sich vollständig innerhalb von weniger als 50 Sekunden auf.

### Beispiel F11: Kaubonbon mit erfindungsgemäßem Aroma

| | | |
|---|---|---|
| Wasser | | 7,8 % |
| Zucker | Raffinade C4 | 42,1 % |
| Glucose Sirup | Dextrose 40 | 37,3 % |
| gehärtetes Pflanzenfett | Schmelzpunkt 32-36°C | 6,6 % |
| Lecithin | Emulgator (Sojalecithin) | 0,3 % |
| Gelatine | Schweinegelatine | 0,8 % |
| Fondant | Typ - S30 | 4,9 % |
| Aroma A1 aus Beispiel 2 | | 0,2 % |

Herstellungshinweise:
a) Gelatine mit Wasser (1,8 fache Menge der Gelatine) bei 70°C 2 Stunden quellen lassen;
b) Zucker, Sirup, Wasser, Fett und Lecithin auf 123°C kochen;
c) Gelatinelösung langsam mit dem Kochansatz vermischen;
d) Aroma aus Beispiel 2 und optional Farbe unterrühren;
e) resultierende Masse auf einem Kühltisch auf ca. 70°C temperieren, danach Fondant zugeben und auf einer Ziehmaschine ca. 3 Minuten belüften;
f) Kaubonbonmasse anschließend schneiden und verpacken.

Beim Verzehr der Kaubonbons wird ein kräftiger Pfefferminzgeschmack während des Kauens wahrgenommen.

### Beispiel F12: Komprimate mit erfindungsgemäßem Aroma

| | |
|---|---|
| Dextrose | 98,0 Gew.-% |
| Magnesium Stearat (Gleitmittel) | 0,9 Gew.-% |
| Citronensäure | 0,3 Gew.-% |
| Aroma A2 aus Beispiel 2 | 0,8 Gew.-% |

Herstellungshinweise: Alle Bestandteile mischen und in einer geeigneten Maschine zu Komprimaten verpressen.

### Beispiel F13: Götterspeise mit erfindungsgemäßem Aroma

| | | |
|---|---|---|
| Zucker | Saccharose | 81,9 Gew.-% |
| Stabilisator | Hamulsion GGF Hahn & Co., Lübeck | 12,0 Gew.-% |
| Citronensäure | gemahlen | 3,0 Gew.-% |
| Trinatriumcitrat | Gelierhilfe | 2,0 Gew.-% |
| grüne Farbe | | 0,05 Gew.-% |
| Aroma A1 aus Beispiel 2 | | 1,05 Gew.-% |

Herstellungshinweis: 41 g dieser Mischung in 250 mL kochendes Wasser einrühren und erkalten lassen.

### Beispiel F14: Extrudat mit erfindungsgemäßem Aroma

| | | |
|---|---|---|
| Glukosesirup, sprühgetrocknet (DE-Wert: 31-34) | Glucidex IT33W (Firma Roquette) | 62,0 % |
| Maltodextrin (DE-Wert: 17-20) | (Firma Cerestar) | 28,4 % |
| Emulgator Monomuls | Emulgator auf der Basis von gehärtetem Palmöl; Schmelzpunkt: 64°C, (Firma Grünau) | 1,8 % |
| Dextrosemonohydrat (DE-Wert: 99,5) | Dextrose, kristallwasserhaltig (Firma Cerestar) | 1,8 % |
| Wasser | | 2,0 % |
| Aroma A2 aus Beispiel 2 | | 4,0 % |

Herstellungshinweis (siehe auch WO 03/092412):
Alle Bestandteile wurden gemischt und per Einpunktdosierung in einen Doppelschneckenextruder gefördert. Die Extrusionstemperaturen lagen zwischen 100 und 120°C, der spezifische Energieeintrag lag bei 0,2 kWh/kg. Die aus der mit 1 mm Bohrungen versehene Düsenplatte des Extruders austretenden Stränge wurden unmittelbar nach Austritt aus den Düsen durch rotierende Messer auf Partikel mit ca. 1 mm Durchmesser geschnitten.

### Beispiel F15: Wirbelschichtgranulate mit erfindungsgemäßem Aroma

In einer Granulierapparatur des in EP 163 836 dargestellten Typs (mit den folgenden Merkmalen: Durchmesser Anströmboden: 225 mm, Sprühdüse: Zweistoffdüse; Sichtender Austrag: Zick-Zack-Sichter; Filter: interner Schlauchfilter) wird eine Lösung bestehend aus 44 Gew.-% Wasser, 11 Gew.-% erfindungsgemäßem Aroma A1 aus Beispiel 2, 13 Gew.-% Gummi arabicum und 32 Gew.-% hydrolysierter Stärke (Maltodextrin DE 15-19) sowie etwas grünem Farbstoff granuliert. Die Lösung wird bei einer Temperatur von 32°C in den Wirbelschichtgranulator gesprüht. Zur Fluidisierung des Bettinhaltes wird Stickstoff in einer Menge von 140 kg/h eingeblasen. Die Eintrittstemperatur des Fluidisiergases beträgt 140°C. Die Temperatur des Abgases beträgt 76°C. Als Sichtgas wird ebenfalls Stickstoff in einer Menge von 15 kg/h mit einer Temperatur von 50°C zugeführt. Der Inhalt des Wirbelbettes beträgt ca. 500 g. Die Granulierleistung beträgt ca. 2,5 kg pro Stunde. Man erhält ein frei fließendes Granulat mit einem mittleren Teilchendurchmesser von 360 Mikrometern. Die Granulate sind rund und weisen eine glatte Oberfläche auf. Aufgrund des konstanten Druckverlustes des Filters und des ebenfalls konstant bleibenden Bettinhalts ist von stationären Bedingungen hinsichtlich des Granulationsprozesses auszugehen.

Beispiel F16: Teebeutel mit schwarzem Tee bzw. Rooibos-Tee und Granulaten enthaltend erfindungsgemäßes Aroma

### Beispiel F16a:

800 g Rotbuschtee (Rooibos-Tee) und 33 g der Aromapartikel aus Beispiel F14 mit erfindungsgemäßem Aroma A2 aus Beispiel 2 wurden gemischt, portioniert und anschließend in Teebeutel abgefüllt.

### Beispiel F16b:

850 g Schwarztee Fannings wurden in einem 5 Liter Lödige Pflugscharmischer vorgelegt und 10 Sekunden vorgemischt und fluidisiert. Ohne Unterbrechung des Mischprozesses wurde mittels einer Ein- oder Zweistoffdüse 6 g eines feinen Neutralöl-Nebels (Medium-Chain-Triglyceride-Ölaerosol) auf die fluidisierten Teeblätter gesprüht. Dies dauerte etwa 60 Sekunden. Ohne Unterbrechung des Mischprozesses wurden anschließend 40 g der oben genannten eingefärbten Aromapartikel aus Beispiel F15 mit erfindungsgemäßem Aroma A1 aus Beispiel 2 zu der fluidisierten Mischung gegeben und die gesamte Mischung weitere 60 Sekunden gemischt. Die so erhaltene Mischung wurde anschließend portioniert und in Teebeutel abgefüllt.

### Beispiel F17: Kaugummidragees, zuckerfrei

### Q1: Bestandteile Kaugummi-Rohmasse

| | I (Gew.-%) | II (Gew.-%) | III (Gew.-%) |
|---|---|---|---|
| Kaugummibase | 37,00 | 37,00 | 37,00 |
| Sorbit, Pulver | 50,50 | 50,50 | 50,50 |
| Aspartam | 0,20 | 0,20 | 0,20 |
| Plasticizer (Emulgum) | 0,50 | 0,50 | 0,50 |
| Acesulfame K | 0,20 | 0,20 | 0,20 |
| Sorbit 70 %ig in Wasser | 5,00 | 5,00 | 5,00 |
| Glycerin | 4,00 | 4,00 | 4,00 |
| Aroma A1 aus Beispiel 2 | 1,20 | 1,40 | 1,60 |
| Pfefferminzöl-Aroma (Optamint^{®}, Symrise) | 0,40 | 0,20 | - |
| Menthol, kristallin | 1,00 | 0,50 | 0,10 |
| Menthol, sprühgetrocknet | - | 0,50 | 0,90 |

### Q2: Bestandteile Coating (Überzug)

(die angegebenen Gewichtsanteile beziehen sich auf die Gesamtmasse des auf die Kaugummikissen (Q1) aufgebrachten Coatings (Q2); die Gesamtmasse an Q2 betrug etwa 35% bezogen auf die Masse Q1)

| | I (Gew.-%) | II (Gew.-%) | III (Gew.-%) |
|---|---|---|---|
| **Mischung A** | | | |
| Isomalt | 0,20 | 0 | 0 |
| Sorbitol | 0 | 0,40 | 0 |
| Mannitol | 0 | 0 | 0,80 |
| I-Menthol, sprühgetrocknet | 0,20 | 0,60 | 1,00 |

| **Mischung B** | | | |
|---|---|---|---|
| Isomalt | 68,00 | 67,70 | 67,40 |
| Wasser | 26,7 | 26,6 | 26,5 |
| Gummi Arabicum 40%ig in Wasser (dieser Anteil beinhaltet die für die Gummierung verwendete Menge) | 2,50 | 2,50 | 2,50 |
| Acesulfame K | 0,05 | 0,05 | 0,05 |
| Aspartam | 0,05 | 0,05 | 0,05 |
| Titandioxid | 1,50 | 1,50 | 1,50 |

| **Bestandteil C** | | | |
|---|---|---|---|
| Aroma A2 aus Beispiel 2 | 0,80 | 0,60 | 0,20 |

Alle Bestandteile der Kaugummi-Rohmasse (Q1) wurden gemischt, in Kaugummistränge geprägt und anschließend zu einzelnen Kaugummikissen geformt. Die Kaugummikissen wurden danach in einer rotierenden Dragiertrommel mit einer 40 Gew.-%igen Gummi Arabicum Lösung benetzt (gummiert). Die gummierten Kaugummikissen wurden anschließend in einer rotierenden Dragiertrommel mit der pulvrigen Mischung A überzogen, welche im Wesentlichen bestand aus sprühgetrocknetem I-Menthol und mindestens einem Zuckeraustauschstoff (meist gewählt aus Isomalt, Sorbit, Xylit, Maltit und/oder Mannit, gegebenenfalls kann zusätzlich pulvriges Gummi Arabicum verwendet werden). Nach ausreichender Trocknung mit kalter Luft wurden die so beschichteten Kaugummikissen über Nacht getrocknet. Zum weiteren Aufbringen des Coatings auf die getrockneten, beschichteten Kaugummikissen mit der Coatinglösung B wurden zunächst 15 Schichten mittels Dragierung aufgetragen, in der 16. Schicht wird ein Gemisch aus Bestandteil C und Mischung B aufgebracht. Es wurden danach weitere Schichten unter Verwendung der Mischung B aufgetragen, bis das Gesamtgewicht des Coatings (Q2) etwa 35 Gew.-% des Gewichts der ursprünglichen Kaugummikissen (Q1) betrug. Um den Kaugummidragees Glanz zu verleihen erfolgte eine abschließende Behandlung mit einem Glanzmittel, welches aus einer Mischung gleicher Gewichtsanteile von Carnauba- und Bienenwachs bestand. Die gebrauchsfertigen Kaugummidragees rufen beim Kauen im Mund einen sehr klaren, strahlenden, frischen mentholigen und natürlichen Pfefferminzgeschmack hervor.

### Beispiel F18: Sprühgetrocknetes erfindungsgemäßes Aroma

Ein grün-gelb eingefärbtes sprühgetrocknetes erfindungsgemäßes Aroma (enthaltend Maltodextrin (DE: 18-20), Dextrose, Gummi Arabicum, Aroma A1 aus Beispiel 2, (-)-Carvon, Farbstoff und das Antioxidans Ascorbylpalmitat) mit folgender Partikelgrößenverteilung wurde über eine Druckdüse hergestellt:
D (v 0,1): 26,8 Mikrometer,
D (v 0,5): 68,02 Mikrometer,
D (v 0,9): 126,4 Mikrometer

### Beispiel F19: Instant-Getränkepulver mit sprühgetrocknetem erfindungsgemäßen Aroma

| | |
|---|---|
| Zucker (Saccharose) | 82,249 Gew.-% |
| Citronensäure | 11,58 Gew.-% |
| Trinatriumcitrat | 0,70 Gew.-% |
| Tricalciumphosphat | 0,60 Gew.-% |
| Vitamin C | 0,66 Gew.-% |
| Grindsted^{®} JU 543 Stabilizer System (Danisco) | 0,90 Gew.-% |
| Saccharin | 0,561 Gew.-% |
| Citronenaroma, sprühgetrocknet | 1,75 Gew.-% |
| Aroma, sprühgetrocknet, gemäß Beispiel F18 | 1,00 Gew.-% |

45 g dieses Instant-Getränkepulvers wurden in 1000 mL unter Rühren gelöst. Das erhaltene Getränk hatte einen erfrischenden, kühlenden Geschmack von Citrone und Pfefferminze.

### Beispiel F20: Hartkaramelle (hard boiled candy) mit erfindungsgemäßen Aroma

| | |
|---|---|
| Zucker (Saccharose) | 51,89 Gew.-% |
| Maissirup (Corn syrup), enthält Glucose und Fructose | 41,00 Gew.-% |
| Maltose | 3,00 Gew.-% |
| Palmkernöl | 0,90 Gew.-% |
| Citronensäure | 0,30 Gew.-% |
| Ginseng Extrakt | 0,40 Gew.-% |
| Blauer Farbstoff | 0,01 Gew.-% |
| Aroma A2 aus Beispiel 2 | 2,50 Gew.-% |

Zucker, Maissirup und Maltose wurden in Wasser gelöst, gekocht und vakuumiert. Anschließend wurden die restlichen Zutaten unter die gekochte Zuckermasse gezogen und bei Siedetemperatur homogenisiert. Nach Abkühlen wurden aus der resultierenden Masse Hartkaramellen geprägt. Die Hartkaramellen zeigten einen Restwassergehalt von etwa 2,5 Gew.-%.

Beispiel F21: Halsbonbons mit flüssig-viskoser Kernfüllung (center-filled hard candy) mit erfindungsgemäßem Aroma

| | I (Gew.-%) | II (Gew.-%) |
|---|---|---|
| **Mischung A (Hülle) (80% der Bonbons)** | | |
| Zucker (Saccharose) | 58,12 | 49,37 |
| Glucosesirup (Feststoffgehalt 80%) | 41,51 | 49,37 |
| Aroma A1 aus Beispiel 2 | 0,17 | 0,25 |
| I-Menthol | 0,10 | - |
| Citronenöl | 0,10 | 0,10 |
| Citronensäure | - | 0,91 |
| Total: | 100 | 100 |

| **Mischung B (Kern) (20% der Bonbons)** | | |
|---|---|---|
| High Fructose Maissirup (Gehalt an festen Zuckern 85%, knapp 15% Wasser) | 84,38 | 84,36 |
| Glycerin | 15,0 | 15,0 |
| Lecithin | 0,02 | 0,02 |
| Zimtöl | - | 0,32 |
| Aroma A1 aus Beispiel 2 | 0,28 | - |
| Capsaicin | 0,05 | - |
| Vanillylalkohol-n-butylether | - | 0,10 |
| Roter Farbstoff, als 5%ige wässrige Lösung | 0,20 | 0,20 |
| Vanillin | 0,07 | - |
| Total | 100 | 100 |

In Anlehnung an die in US 6,432,441 (dort Beispiel 1) sowie die in US 5,458,894 bzw. US 5,002,791 beschriebenen Verfahren wurden Bonbons mit flüssigviskosem Kern hergestellt. Beide Mischungen A und B wurden separat zu Basen für Hülle (Mischung A) bzw. Kern (Mischung B) verarbeitet. Die mittels Co-Extrusion erhaltenen gefüllten Halsbonbons wirkten bei betroffenen Personen beim Verzehr gegen Husten, Halsschmerzen und Heiserkeit.

### Beispiel F22: Likör mit erfindungsgemäßem Aroma

Ein verzehrfertiges alkoholisches Getränk in Form eines nach Pfefferminz schmeckenden Likörs wurde hergestellt durch Mischen von 5 g erfindungsgemäßem Aroma A2 aus Beispiel 2 und 100 Litern einer grün eingefärbten alkoholisch-wässrigen Zuckerlösung, welche 18 Gew.-% Zucker (Saccharose) und 17,5 vol.-% Alkohol (Ethanol) enthielt.

### Beispiel F23: Erfrischungsgetränk mit erfindungsgemäßem Aroma

Ein verzehrfertiges nicht-alkoholisches Getränk in Form eines nach Pfefferminz schmeckenden Erfrischungsgetränks wurde hergestellt durch Mischen von 1 g erfindungsgemäßem Aroma A2 aus Beispiel 2 und 100 Litern einer gelbgrün eingefärbten 10,8 Gew.-%igen wässrigen Zuckerlösung.

## Patentansprüche

1. Verwendung von Nonenolid zum Vermitteln, Modifizieren und/oder Verstärken einer oder mehrerer Geruchs- oder Geschmackseindrücke aus der Gruppe bestehend aus Heu und Cumarin.

2. Parfümierter oder aromatisierter Artikel umfassend oder bestehend aus:
(a) Nonenolid,
(b) einer, mehreren oder sämtlichen Verbindungen ausgewählt aus der Gruppe bestehend aus
(i) Menthol,
(ii) (-)-Carvon
(iii) Menthon und
(iv) Isomenthon,
sowie vorzugsweise
(c) 4-Methyl-5-hydroxy-hexansäurelacton
und/oder
(d) Menthylacetat.

3. Artikel nach Anspruch 2, wobei der Artikel ausgewählt ist aus der Gruppe bestehend aus:
- Riech- oder Aromastoffkomposition, vorzugsweise Pfefferminz- oder Krauseminzaromastoffkomposition,
- der Ernährung dienende Zubereitung, vorzugsweise verzehrfertiges oder nicht verzehrfertiges Lebensmittel,
- der Mundpflege dienende Zubereitung und
- dem Genuss dienende Zubereitung.

4. Artikel nach Anspruch 2 oder 3, enthaltend eine Menge an Nonenolid, die ausreicht, um einen oder mehrere Geruchs- oder Geschmackseindrücke aus der Gruppe bestehend aus Heu und Cumarin zu vermitteln, zu modifizieren und/oder zu verstärken.

5. Riech- oder Aromastoffkomposition nach Anspruch 3 oder 4, **dadurch gekennzeichnet, dass** die Riech- oder Aromastoffkomposition eine Menge an Nonenolid im Bereich von 50 bis 8000 ppm, bevorzugt 100 bis 5000 ppm und besonders bevorzugt 250 bis 2000 ppm, bezogen auf die Gesamtmenge der Riech- oder Aromastoffkomposition, umfasst.

6. Riech- oder Aromastoffkomposition oder der Ernährung, der Mundpflege oder dem Genuss dienende Zubereitung nach einem der Ansprüche 3 bis 5, umfassend eine Menge an einer oder mehreren Verbindungen ausgewählt aus der Gruppe bestehend aus
(i) Menthol,
(ii) (-)-Carvon,
(iii) Menthon und
(iv) Isomenthon,
die ausreicht, um in der Riech- oder Aromastoffkomposition oder der Zubereitung eine dominierende Pefferminz- und/oder Krauseminz-Geruchs- oder Geschmacksnote zu erzeugen.

7. Riech- oder Aromastoffkomposition nach einem der Ansprüche 3 bis 6, umfassend:
(a) Nonenolid in einer Menge von 50 bis 8000 ppm, bevorzugt 100 bis 5000 ppm und besonders bevorzugt 250 bis 2000 ppm,
sowie
(b)
(i) Menthol, vorzugsweise I-Menthol, in einer Menge von 1 bis 80 Gew.-%, bevorzugt 5 bis 70 Gew.-%,
und/oder
(ii) (-)-Carvon in einer Menge von 1 bis 80 Gew.-%, bevorzugt 5 bis 80 Gew.-%,
und/oder
(iii) Menthon, vorzugsweise (-)-Menthon,
und/oder
(iv) Isomenthon, vorzugsweise (+)-Isomenthon, in einer Gesamtmenge von 0,5 bis 60 Gew.%, bevorzugt 1 bis 50 Gew.%,
sowie vorzugsweise
(c) 4-Methyl-5-hydroxy-hexansäurelacton in einer Menge von 50 bis 8000 ppm, bevorzugt 100 bis 5000 ppm und besonders bevorzugt 250 bis 2000 ppm
und/oder
(d) Menthylacetat, vorzugsweise (-)-Menthylacetat in einer Menge von 1 bis 20 Gew.-%, bevorzugt 2 bis 12 Gew.-%, besonders bevorzugt 3 bis 10 Gew.-%,
wobei die Mengenangaben jeweils bezogen sind auf die Gesamtmenge der Riech- oder Aromastoffkomposition.

8. Der Ernährung, der Mundpflege oder dem Genuss dienende Zubereitung nach einem der Ansprüche 3, 4 oder 6, umfassend
- Nonenolid in einer Menge im Bereich von 0,05 bis 80 ppm, bevorzugt im Bereich von 0,1 bis 50 ppm und besonders bevorzugt im Bereich von 0,25 bis 20 ppm,
bezogen auf das Gesamtgewicht der Zubereitung.

9. Zubereitung nach Anspruch 8, wobei die Zubereitung gebrauchsfertig ist und vorzugsweise
(A) eine verzehrfertige und dabei zuckerfreie, zuckerreduzierte oder zuckerhaltige Süßware, insbesondere in Form von: Schokolade, gefüllten Schokolade (beispielsweise mit aromatisierter Fondant-Masse, z.B. des Typs After-Eight), Schokoladenriegelprodukt, Fruchtgummi, Hart- oder Weichkaramelle, Kaubonbon, Zuckerperle, Lutscher, Kapsel (vorzugsweise nahtlose Kapsel, bevorzugt zum Direktverzehr, vorzugsweise mit einer Umhüllung basierend auf Gelatine und/oder Alginat), Kaugummi (z.B. in Form von Streifen, Komprimaten, Pellets, Kissen, Kugeln, Hohlkugeln)
oder
(B) ein Mundpflegeprodukt (Mundhygieneprodukt), insbesondere in Form von: Zahnpasta, Zahncreme, Zahngel, Zahnpulver, Zahnputzflüssigkeit, Zahnputzschaum, Mundwasser, Zahncreme und Mundwasser als 2-in-1 Produkt, Lutschbonbon, Mundspray, Zahnseide, oder Zahnpflegekaugummi
oder
(C) ein alkoholisches oder nicht-alkoholisches Getränk ist.

10. Verfahren zum Vermitteln, Modifizieren und/oder Verstärken einer oder mehrerer Geruchs- oder Geschmackseindrücke aus der Gruppe Heu und Cumarin, wobei Nonenolid oder eine Nonenolid umfassende Riech- oder Aromastoffkomposition, vorzugsweise nach einem der Ansprüche 3 bis 7, mit einem Erzeugnis in Kontakt gebracht oder gemischt wird.

11. Verfahren zur Herstellung einer Riech- oder Aromastoffkomposition, mit folgendem Schritt:
- Vermischen von
Nonenolid mit üblichen Bestandteilen einer Riech- oder Aromastoffkomposition,
wobei das Nonenolid in einer Menge eingesetzt wird, die ausreicht, um in der Riech- oder Aromastoffkomposition einen oder mehrere Geruchs- oder Geschmackseindrücke aus der Gruppe bestehend aus Heu und Cumarin zu vermitteln, zu modifizieren und/oder zu verstärken,
wobei die Riech- oder Aromastoffkomposition eine Riech- oder Aromastoffkomposition nach einem der Ansprüche 3 bis 7 ist und
(a) Nonenolid
mit
(b) einer, mehreren oder sämtlichen Verbindungen ausgewählt aus der Gruppe bestehend aus
(i) Menthol,
(ii) (-)-Carvon
(iii) Menthon und
(iv) Isomenthon,
sowie vorzugsweise
(c) 4-Methyl-5-hydroxy-hexansäurelacton
und/oder
(d) Menthylacetat
vermischt wird.

## Claims

1. Use of nonenolide for imparting, modifying and/or enhancing one or more odour or taste impressions from the group consisting of hay and coumarin.

2. Perfumed or flavoured article comprising or consisting of:
(a) nonenolide,
(b) one compound, a plurality of compounds or all the compounds from the group consisting of
(i) menthol,
(ii) (-)-carvone,
(iii) menthone and
(iv) isomenthone,
and preferably
(c) 4-methyl-5-hydroxy-hexanoic acid lactone
and/or
(d) menthyl acetate.

3. Article according to claim 2, wherein the article is selected from the group consisting of:
- a fragrance or flavouring composition, preferably a peppermint or spearmint flavouring composition,
- a preparation for nutrition, preferably a foodstuff that is ready to eat or not ready to eat,
- a preparation for oral care and
- a preparation for consumption for pleasure.

4. Article according to claim 2 or 3, comprising an amount of nonenolide that is sufficient to impart, modify and/or enhance one or more odour or taste impressions from the group consisting of hay and coumarin.

5. Fragrance or flavouring composition according to claim 3 or 4, **characterised in that** the fragrance or flavouring composition comprises an amount of nonenolide in the range from 50 to 8000 ppm, preferably from 100 to 5000 ppm and particularly preferably from 250 to 2000 ppm, based on the total amount of the fragrance or flavouring composition.

6. Fragrance or flavouring composition or preparation for nutrition, oral care or consumption for pleasure according to any one of claims 3 to 5, comprising an amount of one or more compounds selected from the group consisting of
(i) menthol,
(ii) (-)-carvone,
(iii) menthone and
(iv) isomenthone
that is sufficient to produce in the fragrance or flavouring composition or in the preparation a dominant peppermint and/or spearmint odour or taste note.

7. Fragrance or flavouring composition according to any one of claims 3 to 6, comprising:
(a) nonenolide in an amount of from 50 to 8000 ppm, preferably from 100 to 5000 ppm and particularly preferably from 250 to 2000 ppm,
and also
(b)
(i) menthol, preferably 1-menthol, in an amount of from 1 to 80 wt.%, preferably from 5 to 70 wt.%,
and/or
(ii) (-)-carvone in an amount of from 1 to 80 wt.%, preferably from 5 to 80 wt.%,
and/or
(iii) menthone, preferably (-)-menthone,
and/or
(iv) isomenthone, preferably (+)-isomenthone, in a total amount of from 0.5 to 60 wt.%, preferably from 1 to 50 wt.%,
and also preferably
(c) 4-methyl-5-hydroxy-hexanoic acid lactone in an amount of from 50 to 8000 ppm, preferably from 100 to 5000 ppm and particularly preferably from 250 to 2000 ppm
and/or
(d) menthyl acetate, preferably (-)-menthyl acetate, in an amount of from 1 to 20 wt.%, preferably from 2 to 12 wt.%, particularly preferably from 3 to 10 wt.%,
wherein the amounts are in each case based on the total amount of the fragrance or flavouring composition.

8. Preparation for nutrition, oral care or consumption for pleasure according to any one of claims 3, 4 or 6, comprising
- nonenolide in an amount in the range from 0.05 to 80 ppm, preferably in the range from 0.1 to 50 ppm and particularly preferably in the range from 0.25 to 20 ppm,
based on the total weight of the preparation.

9. Preparation according to claim 8, wherein the preparation is ready to use and is preferably
(A) a ready-to-eat sugar-free, reduced-sugar or sugar-containing confectionery item, in particular in the form of: chocolate, filled chocolate (for example filled with flavoured fondant, e.g. of the After-Eight type), chocolate bar product, fruit gum, hard or soft caramel, chewy sweet, sugar pearl, lollipop, capsule (preferably seamless capsule, preferably for direct consumption, preferably with a gelatin- and/or alginate-based shell), chewing gum (e.g. in the form of sticks, compressed tablets, pellets, cushions, balls, hollow balls)
or
(B) an oral care product (oral hygiene product), in particular in the form of: toothpaste, tooth cream, tooth gel, toothpowder, tooth-cleaning liquid, tooth-cleaning foam, mouthwash, tooth cream and mouthwash as a 2-in-1 product, boiled sweet, mouth spray, dental floss or dental care gum
or
(C) an alcoholic or non-alcoholic drink.

10. Method of imparting, modifying and/or enhancing one or more odour or taste impressions from the group hay and coumarin, wherein nonenolide or a fragrance or flavouring composition comprising nonenolide, preferably according to any one of claims 3 to 7, is brought into contact or mixed with a product.

11. Process for the preparation of a fragrance or flavouring composition, comprising the following step:
- mixing
nonenolide with conventional constituents of a fragrance or flavouring composition, wherein the nonenolide is used in an amount that is sufficient to impart, modify and/or enhance in the fragrance or flavouring composition one or more odour or taste impressions from the group consisting of hay and coumarin,
wherein the fragrance or flavouring composition is a fragrance or flavouring composition according to any one of claims 3 to 7 and
(a) nonenolide
is mixed with
(b) one compound, a plurality of compounds or all the compounds from the group consisting of
(i) menthol,
(ii) (-)-carvone,
(iii) menthone and
(iv) isomenthone,
and preferably
(c) 4-methyl-5-hydroxy-hexanoic acid lactone
and/or
(d) menthyl acetate.

## Revendications

1. Utilisation de nonénolide pour la fourniture, la modification et/ou le renforcement d'une ou plusieurs impressions olfactives ou gustatives choisies parmi le foin et la coumarine.

2. Article parfumé ou aromatisé comprenant ou constitué de :
(a) un nonénolide,
(b) un, plusieurs ou certains composés choisis parmi
(i) le menthol,
(ii) la (-)-carvone,
(iii) la menthone, et
(iv) l'isomenthone,
ainsi que de préférence
(c) la lactone d'acide 4-méthyl-5-hydroxy-caproïque,
et/ou
(d) l'acétate de menthyle.

3. Article selon la revendication 2, dans lequel l'article est choisi parmi
- une composition de matière odorante ou d'arôme, de préférence une composition de matière d'arôme de menthe ou de menthe crépue,
- une préparation servant à l'alimentation, de préférence un aliment prêt à consommer ou non prêt à consommer,
- une préparation servant au soin buccal et
- une préparation servant à la consommation.

4. Article selon la revendication 2 ou 3 contenant une quantité de nonénolide qui suffit pour fournir, modifier et/ou renforcer une ou plusieurs impressions olfactives ou gustatives choisies parmi le foin ou la coumarine.

5. Composition de matière odorante ou d'arôme selon la revendication 3 ou 4, **caractérisée en ce que** la composition de matière odorante ou d'arôme comprend une quantité de nonénolide dans le domaine de 50 à 8 000 ppm, de préférence de 100 à 5 000 ppm et encore mieux de 250 à 2 000 ppm, rapportées à la quantité totale de la composition de matière odorante ou d'arôme.

6. Composition de matière odorante ou d'arôme ou préparation servant à l'alimentation, le soin buccal ou la consommation selon l'une des revendications 3 à 5 comprenant une quantité d'un ou plusieurs composés choisis parmi :
(i) le menthol,
(ii) la (-)-carvone,
(iii) la menthone, et
(iv) l'isomenthone,
qui suffit pour produire dans la composition de matière odorante ou d'arôme ou dans la préparation une note olfactive ou gustative dominante de menthe et/ou de menthe crépue.

7. Composition de matière odorante ou d'arôme selon l'une quelconque des revendications 3 à 6 comprenant :
(a) un nonénolide dans une quantité de 50 à 8 000 ppm, de préférence de 100 à 5 000 ppm et encore mieux de 250 à 2 000 ppm,
ainsi que
(b) (i) du menthol, de préférence du I-menthol, dans une quantité de 1 à 80 % en poids, de préférence de 5 à 70 % en poids,
et/ou
(ii) de la (-)-carvone dans une quantité de 1 à 80 % en poids, de préférence de 5 à 80 % en poids,
et/ou
(iii) de la menthone, de préférence de la (-)menthone,
et/ou
(iv) de l'isomenthone, de préférence de l'(+)-isomenthone dans une quantité totale de 0,5 à 60 % en poids, de préférence de 1 à 50 % en poids,
ainsi que de préférence
(c) de la lactone d'acide 4-méthyl-5-hydroxy-caproïque dans une quantité de 50 à 8 000 ppm, de préférence de 100 à 5 000 ppm et encore mieux de 250 à 2 000 ppm,
et/ou
(d) de l'acétate de menthyle, de préférence de l'(-)-acétate de menthyle dans une quantité de 1 à 20 % en poids, de préférence de 2 à 12 % en poids, encore mieux de 3 à 10 % en poids,
les indications de quantités étant à chaque fois rapportées à la quantité totale de la composition de matière odorante ou d'arôme.

8. Préparation servant à la nutrition, le soin buccal ou la consommation selon l'une quelconque des revendications 3, 4 ou 6 comprenant :
- un nonénolide dans une quantité dans un domaine de 0,05 à 80 ppm, de préférence dans un domaine de 0,1 à 50 ppm et encore mieux dans un domaine de 0,25 à 20 ppm, rapportées au poids total de la préparation.

9. Préparation selon la revendication 8, dans laquelle la préparation est prête à l'emploi et de préférence
(A) une confiserie prête à l'emploi et ce faisant sans sucre, réduite en sucre ou contenant du sucre, en particulier dans la forme: de chocolats, de chocolats fourrés (par exemple avec une masse de fondant aromatisé, par exemple du type after eight), d'un produit de barre chocolatée, d'une gomme fruitée, de caramels durs ou mous, de bonbons à mâcher, de perles de sucre, de sucettes, de gélules (de préférence de capsules sans couture, de préférence pour une consommation directe, de préférence avec une enveloppe à base de gélatine et/ou d'alginate), de gommes à mâcher (par exemple dans la forme de bandes, de comprimés, de boulettes, de coussins, de sphères, de sphères creuses)
ou
(B) un produit pour le soin buccal (produit pour l'hygiène buccale) en particulier dans la forme: de dentifrice, de crème dentaire, de gel dentaire, de poudre dentaire, de liquide pour le nettoyage dentaire, de mousse pour le nettoyage dentaire, d'eau de bouche, de crème dentaire et d'eau de bouche dans la forme d'un produit 2 en 1, de bonbons à sucer, de spray buccal, de savon-dentifrice ou de pâte à mâcher pour le soin dentaire
ou
(C) une boisson alcoolisée ou non alcoolisée.

10. Procédé pour la fourniture, la modification et/ou le renforcement d'une ou plusieurs impressions olfactives ou gustatives choisies parmi le foin et la coumarine, dans lequel un nonénolide ou une composition de matière odorante ou d'arôme comprenant un nonénolide, de préférence selon l'une des revendications 3 à 7, est mis en contact ou mélangé avec un produit.

11. Procédé pour la préparation d'une composition de matière odorante ou d'arôme avec l'étape suivante :
- de mélange de nonénolide avec des constituants classiques d'une composition de matière odorante ou d'arôme,
dans lequel le nonénolide est utilisé dans une quantité qui suffit pour fournir, modifier et/ou renforcer dans la composition de matière odorante ou d'arôme une ou plusieurs impressions olfactives ou gustatives choisies parmi le foin et la coumarine,
dans lequel la composition de matière odorante ou d'arôme est une composition de matière odorante ou d'arôme selon l'une quelconque des revendications 3 à 7, et dans lequel
on mélange
(a) un nonénolide avec
(b) un, plusieurs ou certains composés choisis parmi
(i) le menthol,
et/ou
(ii) la (-)-carvone,
(iii) la menthone, et
(iv) l'isomenthone,
ainsi que de préférence
(c) la lactone d'acide 4-méthyl-5-hydroxy-caproïque
et/ou
(d) l'acétate de menthyle.
